# EUROPEAN PATENT SPECIFICATION

(11) **EP 2 377 916 B1**
(45) Date of publication and mention of the grant of the patent: **04.07.2018**
(21) Application number: 09833148.1
(22) Date of filing: 04.12.2009
(51) Int. Cl.: A21D 2/36, C12F 3/06, C12G 1/00, C12G 1/02, C12G 3/06

(54) **PROCESS FOR PRODUCING SOLUTION CONTAINING 3-MERCAPTOHEXAN-1-OL AND ALCOHOL**
VERFAHREN ZUR HERSTELLUNG EINER 3-MERCAPTOHEXAN-1-OL- UND ALKOHOLHALTIGEN LÖSUNG
PROCÉDÉ DE PRÉPARATION D'UNE SOLUTION CONTENANT DU 3-MERCAPTOHEXAN-1-OL ET UN ALCOOL

(30) Priority: 18.12.2008 JP 2008322873; 05.06.2009 JP 2009135657; 28.07.2009 JP 2009175418
(43) Date of publication of application: 19.10.2011
(73) Proprietor: MERCIAN CORPORATION, Chuo-ku Tokyo 104-8305 (JP)
(72) Inventor: TAKASE, Hideki, Tokyo 104-8305 (JP); KOBAYASHI, Hironori, Tokyo 104-8305 (JP); TANZAWA, Fumiko, Tokyo 104-8305 (JP); OHASHI, Hiroyuki, Tokyo 104-8305 (JP); TAKATA, Ryoji, Tokyo 104-8305 (JP); KON-NO, Tomonori, Tokyo 104-8305 (JP); OKOSHI, Takashi, Tokyo 104-8305 (JP)
(74) Representative: Zimmermann & Partner Patentanwälte mbB
(86) International application number: PCT/JP2009/006639
(87) International publication number: WO 2010/070838

(56) References cited:
- WO-A1-2007/095682
- JP-A- 2 312 581
- JP-A- 59 098 672
- JP-A- 2002 136 259
- JP-A- 2005 192 562
- JP-A- 2008 101 097
- DATABASE WPI Week 199115 Thomson Scientific, London, GB; AN 1991-108097 XP002674081, & SU 1 584 888 A (GEOR FOOD IND RES) 15 August 1990 (1990-08-15)
- SWIEGER JH ET AL.: 'Engineering volatile thiol release in Saccharomyces cerevisiae for improved wine aroma' YEAST vol. 24, no. 7, 2007, pages 561 - 574
- NEWBERNE P ET AL.: 'GRAS Flavoring Substances 18' FOOD TECHNOLOGY vol. 52, no. 9, September 1998, page 85
- MAGGU M ET AL.: 'Effect of skin contact and pressure on the composition of Sauvignon Blanc must' J. AGRIC. FOOD CHEM. vol. 55, no. 25, 2007, pages 10281 - 10288
- PEYROT C ET AL.: 'Sulfur aroma precursor present in S-glutathione conjugate form: identification of S-3-(hexan-1-ol)-glutathione in must from Vitis vinifera L. cv. Sauvignon blanc' J. AGRIC. FOOD CHEM. vol. 50, no. 14, 2002, pages 4076 - 4079
- MURAT ML ET AL.: 'Assessing the aromatic potential of Cabernet Sauvignon and Merlot musts used to produce rose wine by assaying the cysteinylated precursor of 3-mercaptohexan- l-ol' J. AGRIC. FOOD CHEM. vol. 49, no. LL, 2001, pages 5412 - 5417
- SWIEGERS JH ET AL.: 'The influence of yeast on the aroma of Sauvignon Blanc wine' FOOD MICROBIOL. vol. 26, no. 2, April 2009, pages 204 - 211
- SUBILEAU M ET AL.: 'New insights on 3-mercaptohexanol (3MH) biogenesis in Sauvignon Blanc wines: Cys-3MH and (E)-hexen-2-al are not the major precursors' J. AGRIC. FOOD CHEM. vol. 56, no. 19, 08 October 2008, pages 9230 - 9235
- SARRAZIN E ET AL.: 'Odorous impact of volatile thiols on the aroma of young botrytized sweet wines: identification and quantification of new sulfanyl alcohols' J. AGRIC. FOOD CHEM. vol. 55, no. 4, 2007, pages 1437 - 1444
- HIRONORI KOBAYASHI ET AL.: 'Koshu Wine no Atarashii Kaori Budo 'Koshu' kara no Message' BIOSCIENCE & INDUSTRY vol. 64, no. 4, 01 April 2006, pages 226 - 227
- HIRONORI KOBAYASHI ET AL.: 'Koshu Kiiroka ni Miru Wine no Koseika Jozoho' SEIBUTSU KOGAKU vol. 86, 25 July 2008, pages 366 - 367
- YASUHIRO OKANO ET AL.: 'Bdo Kahi Zansa kara no Nyusan Seizo' JOURNAL OF ASEV JAPAN vol. 17, no. 3, 25 November 2006, pages 145 - 146

## Description

### [Cross-Reference to Related Patent Application]

The present application claims priority under Japanese Patent Applications 2008-322873 filed on December 18, 2008, 2009-135657 filed on June 5, 2009 and 2009-175418 filed on July 28, 2009.

### [Technical Field]

The present invention relates to a method of production of a solution containing an abundance of 3-mercaptohexan-1-ol (abbreviated to "3MH" hereinafter) and alcohol as defined in claim 1 having a desirable aroma by employing a grape skin extract, , and a method of production of a drink as defined in claim 12 with an enhanced aroma.

### [Background Art]

3MH is a thiol compound comprising an -SH group in its molecular structure that is reported to be contained in wine fermented from grapes such as the Sauvignon blanc variety. The threshold of 3MH is extremely low (threshold 60 ng/L (0.45 nM)). It is an important component that when present in only a trace quantity imparts nuances of grapefruit, passion fruit, and the like that contribute positively to the quality of wines and other fermented beverages.

In grapes, 3MH is present in the form of the precursors S-(3-hexan-1-ol)glutathione (sometimes abbreviated to "3MH-S-GSH" hereinafter) (see Nonpatent Document 1) and S-(3-hexan-1-ol)-L-cysteine (sometimes abbreviated to "3MH-S-Cys" hereinafter) (see Nonpatent Document 2). Generally, 3MH-S-GSH is known to be converted to 3MH-S-Cys by enzymes contained in the grapes themselves as the grapes mature. These 3MH precursors are metabolized by yeast during alcohol fermentation and released into the wine as 3MH. This reaction is attributed to the action of enzymes and the like having beta-lyase activity that are present in yeast; the titer varies with the variety of yeast. Accordingly, the rate of conversion of 3MH precursors to 3MH in fermentation starting materials depends primarily on the variety of yeast.

A portion of the 3MH that is released is converted to 3-mercaptohexyl acetate (sometimes abbreviated to "3MHA" hereinafter), an acetic acid ester, by enzymes such as alcohol acetyl transferase derived from yeast. 3-Mercaptohexyl acetate imparts nuances of passion fruit, boxwood, and *Cytisus scoparius.* With a threshold of 4 ng/L (0.02 nM), it is a substance that contributes greatly to the aroma in the same manner as 3MH. Generally, increasing the quantity of 3MH released increases the quantity of 3MHA.

In tests conducted with model cultures, the rate of conversion of 3MH-S-GSH to 3MH in alcohol fermentation is reported to be from 1/30 up to 1/20 the rate of conversion of 3MH-*S*-Cys to 3MH (see Nonpatent Document 3). Accordingly, in fermentation employing yeast, the rate of conversion of 3MH-*S*-GSH to 3MH is low. In increasing the 3MH content, increasing the quantity of 3MH-*S*-Cys in the fermentation starting materials is presumed to be of particular importance.

In recent years, a theory has been published holding that 3MH-S-GSH is directly picked up by yeast and converted to 3MH (see Nonpatent Document 4). Currently, it has not yet been established whether the conversion by yeast of 3MH-S-Cys to 3MH or of 3MH-S-GSH to 3MH is the main pathway from 3MH precursor to 3MH.

### [Patent Documents]

### [Patent Documents]

[Patent Document 1] Japanese Unexamined Patent Publication (KOKAI) Heisei No. 2-312581
[Patent Document 2] Japanese Unexamined Patent Publication (KOKAI) No. 2005-192562

### [Non-patent Documents]

[Non-patent Document 1] J. Agric. Food Chem., 2002, 50, 4076-4079.
[Non-patent Document 2] J. Agric. Food Chem., 1998b, 46, 5215-5219.
[Non-patent Document 3] Handbook of Enology Volume 2: The Chemistry of Wine and Stabilization and Treatments 2006, pp222
[Non-patent Document 4] J. Agric. Feed Chem., 2008, 56, 9230-9235.
[Non-patent Document 5] Yeast, 2007, 24(7), 561-574.
[Non-patent Document 6] J. Agric. Food Chem., 2007, 55, 1437-1444.
[Non-patent Document 7] J. Chromatogr. A, 2008, 1183, 150-157.
[Non-patent Document 8] J. Agric. Food Chem., 2006, 54, 7251-7255.
[Non-patent Document 9] Handbook of Enology Volume 2: The Chemistry of Wine and Stabilization and Treatments 2006, pp216-219
[Non-patent Document 10] J. Agric. Food Chem. 1998, 46, 1044-1048.

DATABASE WPI Week 199115 Thomson Scientific, London, GB; AN 1991-108097 SU 1 584 888 A, 15 August 1990 describes the preparation of a beverage from fruit juice, in particular grape juice, by fermentation with L. acidophilus. JP 59 098672 A describes that fruit juice which has undergone lactic acid fermentation may be subjected to alcohol fermentation to provide an alcoholic beverage. SWIEGER JH ET AL.: YEAST vol. 24, no. 7, 2007, pages 561 - 574 describes engineering volatile thiol release in Saccharomyces cerevisiae for improved wine aroma. NEWBERNE P ET AL., FOOD TECHNOLOGY, (199809), vol. 52, no. 9, page 85 describes GRAS Flavoring Substances 18. MAGGU M ET AL., J. AGRIC FOOD CHEM., vol.55, no. 25, 2007, pages 10281-10288 describes Sauvignon Blanc must containing about 110 micrograms per litre of 3MH-S-Cys.

### [Summary of the Invention]

### [Problem to Be Solved by the Invention]

Thus, 3MH has become a focus of attention around the world and is an important aroma component that has been the subject of much research. Various attempts have been made to increase the quantity of 3MH in fermented beverages such as wine.

For example, a group in Australia has reported a method of increasing the rate of conversion of 3MH-*S*-Cys to 3MH that does not depend on the variety of yeast (see Nonpatent Document 5). In this method, a tryptophanase gene from *E*. *coli -- tna*A, which has cysteine-beta-lyase activity -- is cloned and incorporated to prepare a genetically altered yeast that is then used in fermentation. This has been reported to have unexpectedly increased the rate of conversion to 3MH in wine. However, although fermented beverages obtained by such methods have high concentrations of 3MH, they are not necessarily desirable beverages. This is because the use of genetically transformed yeast presents dangers with regard to food safety, and could potentially generate consumer discontent.

There are methods of producing wine with a high content of 3MH using non-yeast microbes in the form of *Botrytis cinerea.* When grapes are infected with *Botrytis cinerea*, the quantity of 3MH-S-Cys increases (see Nonpatent Documents 6 and 7). This also applies to wine. Wine that has been fermented from grapes infected with *Botrytis cinerea* is reported to have a higher 3MH content than ordinary wine (see Nonpatent Document 8). However, infecting grapes with *Botrytis cinerea* requires natural conditions consisting of highly humid mornings followed by dry afternoons with sunshine. The variety of grape being infected must also have a thin skin. There are problems in that such natural conditions are difficult to control artificially and the varieties of grape that can be employed are limited.

A further example of the use of a microbe other than yeast to ferment wine is the use of lactic acid bacteria. The objective in using lactic acid bacteria is to reduce the acidic flavor by converting malic acid, which exhibits an intensely acid flavor and is contained in large quantities in highly acidic white and red wines, to lactic acid, which exhibits a mildly acidic flavor. Such methods are referred to as malo-lactic fermentation. Generally, following the conclusion of alcohol fermentation, the wine is inoculated with a lactic acid bacterium such as *Oenococcus oeni*, which is highly resistant to alcohol, and fermented. In malo-lactic fermentation, the malic acid among the organic acids contained in the fermentation starting materials is preferentially converted by lactic acid bacteria to lactic acid. Additionally, in the grape juices employed as common red and white wine starting materials, the content of 3MH precursors is low. When inoculated with lactic acid bacteria following alcohol fermentation as mentioned above, most of the 3MH precursors are consumed by yeast during the initial period of fermentation. Thus, the content of 3MH precursors in the alcohol fermentation product drops even lower. Still further, based on the results of investigation conducted by the present inventors, not all lactic acid bacteria have the ability to convert 3MH-*S*-GSH to 3MH-*S*-Cys. The present inventors believe that even among lactic acid bacteria having the ability to convert 3MH-*S*-GSH to 3MH-*S*-Cys, there are lactic acid bacteria that essentially do not provide a 3MH-*S*-Cys increasing effect, and that confer no practical advantage in enhancing the conversion of 3MH precursors to 3MH.

A method of producing fermented beverages using acid-producing bacteria, including lactic acid bacteria, is known (Patent Document 1). In this method, (1) a fermented starting material broth comprised primarily of saccharide solution, fruit juice, malt juice and a saccharified solution from starting materials in the form of grains is subjected to fermentation by yeast in a first fermentation zone, and the fermentation broth produced is then fermented by acid-producing bacteria in a second fermentation zone; and (2) fermentation is conducted in a first fermentation zone by acid-fermenting bacteria and conducted in a second fermentation zone by yeast. However, the goal of this method is to impart an acidic flavor to the fermented beverage and thereby obtain beers and frothy liquors of strong acidic flavor. Accordingly, the concentration of the 3MH precursors contained in the fermentation starting materials is low. Further, in the same manner as in the above-described malo-lactic fermentation, fermentation by yeast is conducted before fermentation by lactic acid bacteria, presenting the possibility that the 3MH precursors will be almost entirely consumed by the fermentation with yeast. Further, as stated above, not all lactic acid bacteria have the ability to convert 3MH-*S*-GSH to 3MH-*S*-Cys. Even when a lactic acid bacterium has the ability to convert 3MH-*S-*GSH to 3MH-*S*-Cys, in fermentation by lactic acid bacterium, other components, such as malic acid, are present in abundance as nutrients for the lactic acid bacterium, so the conversion of 3MH precursors to 3MH is thought to essentially not occur. Patent Document 1 does not state that the fermented beverage obtained by the method described in Patent Document 1 has an improved aroma. Accordingly, the present inventors believe that there is no increase in the concentration of 3MH by fermentation by lactic acid bacterium.

Similarly, a method of producing a fermented beverage using a lactic acid bacterium is known (Patent Document 2). This method comprises a first fermentation zone in which fermentation starting materials comprising 50 to 100 percent fruit juice are fermented to generate lactic acid, and a second fermentation zone in which fermentation starting materials additionally containing a saccharified solution are fermented by yeast. It is a method of producing fermented malt beverages containing lactic acid-fermented juice. In the method described in Patent Document 2, lactic acid fermentation is conducted first, followed by yeast fermentation. The example of grape juice is given for the starting material juice. However, the 3MH precursor content of grape juice is generally extremely low. Accordingly, although specific examples of fermented drinks employing starting material juice in the form of grape juice are given in Patent Document 2, there is no statement that the aroma thereof has been improved.

Examples of the 3MH content of wine are given below. Among wines fermented from the various grapes of the Alsace region, it is reported that:
in the Gewurtztraminer variety of grape, the 3MH content is 40 to 3,300 ng/L (0.30 to 24.58 nM), and the 3MHA content is 0 to 6 ng/L (0 to 0.03 nM);
in the Riesling variety, the 3MH content is 123 to 1,234 ng/L (0.92 to 9.19 nM), and
the 3MHA content is 0 to 15 ng/L (0 to 0.09 nM);
in the Muscat d'Alsace variety, the 3MH content is 100 to 1,800 ng/L (0.74 to 13.40 nM) and the 3MHA content is 0 to 1 ng/L (0 to 0.01 nM);
in the Pinot gris variety, the 3MH content is 312 to 1,042 ng/L (2.32 to 7.76 nM) and the 3MHA content is 0 to 51 ng/L (0 to 0.29 nM);
in the Pinot blanc variety, the 3MH content is 88 to 248 ng/L (0.66 to 1.85 nM) and the 3MHA content is 0 (0 nM); and
in the Silvaner variety, the 3MH content is 59 to 554 ng/L (0.44 to 4.13 nM) and the 3MHA content is 0 (0 nM).

Among wines fermented from the various grapes of the Sauternes region, it is reported that: in the Colombard variety, the 3MH content is 400 to 1,000 ng/L (2.98 to 7.45 nM) and the 3MHA content is 20 to 60 ng/L (0.11 to 0.34 nM); and in the *Botrytis* cinerea-infected Semillon variety, known as Botrytis wine, the 3MH content is 1,000 to 6,000 ng/L (7.45 to 34.04 nM) and the 3MHA content is 0 (0 nM).

Among wines fermented in the Pyrenees region in the southwest of France, it is reported that in the Petit Manseng variety, the 3MH content is 800 to 4,500 ng/L (5.96 to 33.52 nM) and the 3MHA content is 0 to 100 ng/L (0 to 0.57 nM) (see Nonpatent Document 9).

Additionally, in 1996 vintage wines fermented from Sauvignon blanc grapes in the Bordeaux region of France, the 3MH content is reported to be 3,736 to 12,822 ng/L (27.83 to 95.94 nM) and the 3MHA content to be 275 to 451 ng/L (1.56 to 2. 56 nM). In 1996 vintage wines fermented from Sauvignon blanc grapes in the Sancerre region, the 3MH content is reported to be 1,291 to 3,415 ng/L (9.62 to 25.44 nM) and the 3MHA content to be 212 to 777 ng/L (1.20 to 4.41 nM) (see Nonpatent Document 10).

As set forth above, there are reports of obtaining wines of relatively high concentrations of 3MH. However, it is extremely difficult to obtain such wines, and it has not proven easy to produce wines having both a high 3MH content and a good aroma. Accordingly, it would be desirable to provide a method of readily producing wines having a high 3MH content and a good aroma. Further, were an aromatic agent having a high 3MH content that was capable of imparting the aroma of 3MH to various foods and beverages, including wine, to be available, it would be possible to further enhance the appeal of wine and readily provide beverages and the like in line with consumer preferences. However, as of today, no aromatic agent having a high 3MH content and affording good safety or material suitable for use as an aromatic agent is known.

Accordingly, the first object of the present invention is to provide an alcohol-containing solution, and a method of production of the same, that contains an abundance of 3MH having good aroma, that can be consumed as is as wine, or that can be used as an aromatic agent. The second object of the present invention is to provide an aromatic agent that employs an alcohol-containing solution containing an abundance of 3MH and is capable of imparting a good aroma to food and drink products, and a method of production of a drink with an improved aroma. The third object of the present invention is to provide a method of production of liquors having a good 3-mercaptohexan-1-ol aroma.

### [Means of Solving the Problems]

The present inventors conducted extensive research into solving the above-stated problems. As a result, they obtained the knowledge set forth below and devised the present invention on that basis:
(1) Certain lactic acid bacteria have the ability to convert 3MH-S-GSH to 3MH-S-Cys.
(2) Under certain fermentation conditions, starting materials containing 3MH precursors are fermented by lactic acid bacteria and yeast.
(3) It is possible to use a grape skin extract containing a high concentration of 3MH precursors including 3MH-*S*-GSH and 3MH-*S*-Cys as a starting material containing 3MH precursors.
(4) 3MH-S-GSH is efficiently converted to 3MH-*S*-Cys.
(5) As a result, not only does the 3MH-*S*-Cys content increase, but independently of the variety of yeast, the efficiency of conversion of 3MH-*S*-Cys to 3MH increases markedly, yielding an alcohol-containing solution (fermentation broth) containing a high concentration of 3MH.

It was also discovered that an alcohol-containing solution (fermentation broth) comprising a high concentration of 3MH thus obtained could be consumed as is as wine; that by blending it with or adding it to other foods or drinks, the aroma of the foods or drinks could be adjusted to provide a highly desirable food or drink exhibiting a good 3MH aroma; and that it could be employed as an aromatic agent. The present invention was devised on that basis.

That is, the present invention relates to [1] to [14] below:
[1] A method of production of a solution containing 3-mercaptohexan-1-ol and alcohol, comprising:
   inoculating a starting material aqueous solution comprising S-3-(hexan-1-ol)-glutathione and S-3-(hexan-1-ol)-L-cysteine with a lactic acid bacterium and yeast to produce 3-mercaptohexan-1-ol and alcohol;
   wherein the starting material aqueous solution consists of a grape skin extract;
   the lactic acid bacterium is a lactic acid bacterium that is capable of converting S-3-(hexan-1-ol)-glutathione to S-3-(hexan-1-ol)-L-cysteine; and
   after inoculating the starting material aqueous solution with a lactic acid bacterium and conducting fermentation for 0 to 6 days, the aqueous solution is inoculated with the yeast and alcohol fermentation is conducted,
   wherein the starting material aqueous solution exhibits a concentration of S-3-(hexan-1-ol)-glutathione based on a Brix 20 percent conversion in a range of 300 to 8,000 nM and a concentration of S-3-(hexan-1-ol)-L-cysteine in a range of 70 to 11,100 nM,
[2] The production method according to [1], wherein the starting material aqueous solution exhibits a combined concentration of S-3-(hexan-1-ol)-glutathione and S-3-(hexan-1-ol)-L-cysteine based on a Brix 20 percent conversion in a range of 500 and 15,500 nM.
[3] The production method according to [1] or [2], wherein the grape skin extract is prepared by a method comprising:
   (1) a step of macerating grape skins in a 0.5 to 3-fold quantity of water relative to the wet weight of the grape skins and maintaining the grape skins therein for 0.5 to 96 hours at 0 to 20ºC to extract S-3-(hexan-1-ol)-glutathione and S-3-(hexan-1-ol)-L-cysteine; and
   (2) a step of separating the solid from the liquid in the grape skin maceration solution and removing the grape skins to obtain the grape skin extract.
[4] The production method according to [3], wherein the grape skins are the skins of grapes of the Sauvignon blanc or Chardonnay variety.
[5] The production method of any one of [1] to [4], wherein the 3-mercaptohexan-1-ol and alcohol-containing solution further comprises 3-mercaptohexyl acetate, with the total 3-mercaptohexan-1-ol concentration, which is the combined concentration of 3-mercaptohexan-1-ol and 3-mercaptohexyl acetate, falling within a range of 25 to 5,500 nM.
[6] The production method according to any one of [1] to [5], wherein the 3-mercaptohexan-1-ol and alcohol-containing solution comprises 3-mercaptohexyl acetate.
[7] The production method according to any one of [1] to [6], wherein the period of fermentation by the lactic acid bacterium prior to inoculation with yeast is 1 to 5 days.
[8] The production method according to anyone of [1] to [7], wherein the starting material aqueous solution exhibits a pH in a range of 3 to 9 and the fermentation temperature falls within a range of 10 to 40ºC.
[9] The production method of any one of [1] to [8], wherein the lactic acid bacterium belongs to the genus Lactobacillus.
[10] The production method according to [9], wherein the lactic acid bacterium belonging to the genus Lactobacillus is a lactic acid bacterium belonging to *Lactobacillus plantarum, Lactobacillus pentosus, Lactobacillus hilgardii or Lactobacillus mali.*
[11] The production method of any one of [1] to [10], wherein the starting material aqueous solution exhibits a Brix (%) in a range of 10 to 28 percent.
[12] The production method according to any one of [1] to [11], wherein the 3-mercaptohexan-1-ol and alcohol-containing solution has an alcohol concentration falling within a range of 0.5 to 14 percent.
[13] A method of production of a drink with an improved aroma, comprising producing a 3-mercaptohexan-1-ol and alcohol-containing solution having a total 3-mercaptohexan-1-ol concentration of 150 nM or greater by the method according to any one of claims 1 to 12, and mixing the 3-mercaptohexan-1-ol and alcohol-containing solution thus obtained with a beverage to obtain a beverage with a high 3-mercaptohexan-1-ol content.
[14] The production method according to [13], wherein the beverage used for mixing is wine.

### [Effects of the Invention]

According to the present invention, it is possible to readily provide a wine having both a high content of 3MH, which imparts grapefruit and passion fruit nuances, and a desirable aroma. According to the present invention, it is further possible to provide an alcohol-containing solution (fermentation broth) comprising a high concentration of 3MH that can be employed as an aromatic agent to impart a 3MH aroma to food and drink.

### [Modes of Carrying Out the Invention]

The present invention will be described in detail below.

### [Method for producing 3MH and alcohol-containing solution]

The present invention is a method as defined in claim 1 comprising the step of producing 3-mercaptohexan-1-ol (3MH) and alcohol by inoculating with a lactic acid bacterium and yeast a starting material aqueous solution comprising S-(3-hexan-1-ol)glutathione (3MH-*S*-GSH) and *S*-(3-hexan-1-ol)-L-cysteine (3MH-*S*-Cys). The present invention has the following characteristics:
(1) The starting material aqueous solution consists of a grape skin extract.
(2) The lactic acid bacterium is a lactic acid bacterium capable of converting 3MH-S-GSH to 3MH-*S*-Cys.
(3) After inoculating the starting material aqueous solution with a lactic acid bacterium and conducting fermentation for 0 to 6 days, the aqueous solution is inoculated with yeast and alcohol fermentation is conducted.
(4) The fermentation employing a lactic acid bacterium and the alcohol fermentation employing yeast yield a solution containing 3MH and alcohol.

### <The starting material aqueous solution>

In the production method of the present invention, a starting material aqueous solution containing 3MH-*S*-GSH and 3MH-*S*-Cys is employed. Hereinafter, 3MH-*S*-GSH and 3MH-*S*-Cys will be referred to as 3MH precursors.

A solution consisting of a grape skin extract is employed as the starting material aqueous solution containing 3MH precursors. The grape skin extract can be prepared to contain a high concentration of 3MH precursors, and is thus suitable as a starting material for obtaining an alcohol-containing fermentation broth containing a high concentration of 3MH in the present invention.

The grape skin extract can be prepared, for example, by steps (1) and (2) below.
(1) Grape skins are macerated in a 0.5 to 3-fold quantity of water relative to the wet weight of the grape skins and maintained at 0 to 20ºC for 0.5 to 96 hours to extract 3MH-*S*-GSH and 3MH-*S*-Cys.
(2) The grape skin maceration solution is separated into a solid and a liquid and the grape skins are removed to obtain a grape skin extract.

### Step (1)

In step (1), the grape skins are macerated in water to extract the 3MH-*S-*GSH and 3MH-*S*-Cys contained in them. The extraction conditions can be suitably determined taking into account the extraction efficiency of 3MH-*S*-GSH and 3MH-S-Cys. For example, the quantity of water in which the grape skins are macerated is suitably a 0.5 to 3-fold quantity based on the wet weight of the grape skins. When a 3-fold quantity is exceeded, the concentration of 3MH precursors and sugars decreases, making use as is as a fermentation starting material difficult and relatively increasing the concentration of total polyphenols. At less than 0.5-fold, extraction and handling properties during solid-liquid separation tend to deteriorate.

To enhance extraction efficiency and the solid-liquid separation operation, an enzymatic agent having enzymatic activity such as pectinase can be employed in maceration. Examples of commercial enzymatic agents are sucrase (made by Sankyo); pectinase G, pectinase PL, nurase F, pectinase PL, and pectinase G (made by Amano Enzyme); LAFASE FRUIT and LAFAZYM PRESS (made by LAFFORT); SCOTTZYME BG, SCOTTZYME CINFREE, SCOTTZYME HC, SCOTTZYME KS, and SCOTTZYME PEC5L (made by Scott Laboratories); and LALLZYME EXV, LALLZYME EXV, and LALLZYME BETA (made by LALLEMAND). There is no specific limitation. The quantity of enzyme employed depends on the activity of the enzyme. The use of 10 to 500 ppm under the above maceration conditions is adequate. To the same end, macerating the grape skins in water following freezing increases the extraction efficiency of 3-mercaptohexan-1-ol precursors and shortens the maceration time.

The temperature at which the grape skins are macerated and the 3-mercaptohexan-1-ol precursors are extracted is suitably 0 to 20ºC. At 0ºC and above, 3-mercaptohexan-1-ol precursors can be efficiently extracted. At below 0ºC, freezing occurs during maceration, and extraction and the solid-liquid separation operation become difficult. At greater than 20ºC, from the perspective of flavor and fermentation characteristics, the total amount of polyphenol extracted, which is a negative factor, ends up undergoing a relative increase. No specific pH adjustment is required. This is because when the pH during extraction falls within a range of pH 2 to 11, there is almost no variation in the extraction rate due to pH. When the total quantity of polyphenol increases, marked deterioration in flavor in the form of astringency, bitterness, and the like and deterioration in fermentation properties are observed. Thus, the extraction conditions are determined so that the total polyphenol concentration in the grape skin extract is desirably kept to 6,000 ppm or lower, preferably 2,000 ppm or lower, more preferably 600 ppm or lower based on a Brix 20 percent conversion. Although depending on conditions such as the quantity and temperature of the water employed in maceration and the stirring rate, an extraction time falling within a range of 0.5 to 96 hours is adequate. The concentration of the 3MH precursors extracted can be measured timely and the end time of the extraction operation can be determined based on the results. The end time of the extraction operation can be the point at which the concentration measured becomes roughly constant. In the present invention, the Brix (%) refers to a value denoting the soluble solids as measured with a sugar refractometer. It indicates the concentration of soluble solids in an aqueous solution as a weight percentage. The 3-mercaptohexan-1-ol precursor concentration based on a Brix 20 percent conversion means that the concentration of 3-mercaptohexan-1-ol precursors in an aqueous solution is a 3-mercaptohexan-1-ol precursor concentration of Brix 20 percent when converted based on the Brix (%) concentration of an identical aqueous solution.

### Step (2)

In step (2), the grape skin maceration product following the conclusion of the extraction operation is subjected to solid-liquid separation. The solid-liquid separation can be conducted, for example, with a press (membrane press, gasket press), centrifuge, filter press, or some other solid-liquid separation device. The pomace are separated, making it possible to obtain a clear grape skin extract. The grape skin extract obtained can be used as is as a starting material in the production method of the present invention, or can be concentrated as desired.

When concentrating the grape skin extract obtained, a known concentration method such as evaporation concentration (reduced pressure evaporation concentration, for example), membrane concentration, or concentration by freezing is suitably employed. When reduced pressure concentration is employed, a common reduced pressure evaporation concentration device such as a recycling (liquid film down flow type) concentration device, one-pass (spay stream thin film type) concentration device, or flash evaporator can be employed under conditions of an interior temperature of 30 to 110ºC and a pressure of 0.04 to 0.4 bars. To prevent the decomposition of 3MH precursors, conditions of relatively low temperature, such as an interior temperature of 40 to 100ºC, are desirable. When employing membrane processing, a reverse osmosis membrane can be employed under operating conditions of a pressure of 60 to 150 bars and concentration to a degree of Brix 10 to 68 percent can be achieved.

The grape skin extract employed in the production method of the present invention comprises both the grape skin extract (unconcentrated product) obtained by solid-liquid separation and the grape skin extract (concentrated) that is subsequently concentrated. Further, the grape skin extract (concentrated and unconcentrated products) can be clarified and sterilized as needed. These processing methods are not specifically limited. Known methods can be applied. The grape skin extract in the present invention includes such an extract that has been clarified or sterilized.

The grape skins employed in the production of the grape skin extract are not limited to the skins of grapes in the strict sense of the term, but may include grape seeds or stems such as in the pressing pomace of grapes that are discharged in large quantity in the process of manufacturing grape juice and wine. The moisture content of the grape skins that are obtained in the common grape juice and wine manufacturing process, as measured by the hot drying method at ordinary pressure, is 50 to 80 percent (w/w). To prevent oxidation and to prevent the proliferation of microbes, it is desirable to employ the grape skins relatively quickly following pressing. However, the 3MH precursors in the grape skins increase following pressing when the grape skins are left standing for a prescribed period. Extraction by maceration in water subsequent to the prescribed period yields an extract of high 3MH precursor concentration and low total polyphenol concentration. Maceration in water after standing for 0.5 to 24 hours following pressing is desirable. A standing time exceeding 24 hours is undesirable in that contamination by various microorganisms may occur. The standing time from pressing to maceration in water is preferably about 1 to 4 hours in light of the 3MH precursor concentration and the total polyphenol concentration in the extract obtained. The increase in the 3MH precursors in grape skins that are left standing is the result of an enzymatic reaction in the grape skins. This reaction is presumed to be stopped by the operation of deactivating the enzyme by freezing or heating, or the operation of dispersing the enzyme and substrate by maceration in water. The decrease in the total polyphenol concentration in the grape skin extract that is achieved by standing is presumed to be the result of insolubilization brought about by the oxidation polymerization of polyphenols. When the grape skins are stored for a certain period on account of operations -- by freezing, for example -- the stored material is suitably used to prevent oxidation and inhibit the proliferation of microbes. When frozen storage is employed, for the above reasons, the grape skins are desirably left standing for a prescribed period falling within the range set forth above following pressing and before freezing.

The varieties of grapes the skins of which can be employed are not specifically limited. A large number of varieties can be employed: Koshu, Kyoho, Delaware, Chardonnay, Sauvignon blanc, Sauvignon vert, Sauvignon gris, Riesling, Thompson seedless, Semillon, Viognier, Colombard, Muscat of Alexandria, Moscatel de Austria, Moscatel rosada, Pinot noir, Pinot gris, Pinot blanc, Cabernet Sauvignon, Merlot, Shiraz, Malbec, Pedro Ximenez, Torrontes Riojano, Torrontes Mendocino, Torrontes Sanjuanino, Torrontel, Chenin blanc, Ugni blanc, Cereza, Criolla, Red Grove, and the like. However, from the perspective of a high 3MH precursor content, grape skins from the Sauvignon blanc and Chardonnay varieties are desirably employed.

In the grape skin extract obtained by the above-described method, the concentration of 3MH precursors will vary based on the variety of grape skin used as starting material, the extraction conditions, whether or not concentration has been conducted, and to what degree. However, based on Brix 20 percent conversion, the concentration of 3MH-*S*-GSH falls within a range of 300 to 8,000 nM and the concentration of 3MH-*S*-Cys falls within a range of 70 nM to 11,100 nM. Further, in the grape skin extract obtained by the above-described method, the combined concentration of 3MH-*S*-GSH and 3MH-*S*-Cys falls within a range of 500 to 15,500 nM. However, when the 3MH-*S*-GSH concentration, the 3MH-*S*-Cys concentration, or the combined concentration of both falls below the above-stated range, suitable preparation is possible by varying the extraction and concentration conditions.

Further, the total polyphenol concentration in the grape skin extract is desirably kept to 6,000 ppm or less, preferably 2,000 ppm or less, and more preferably, 600 ppm or less. This is because, as set forth above, when the total polyphenol concentration is high, marked deterioration in flavor qualities, such as astringency and bitterness, sometimes compromise the fermentation properties of the lactic acid bacterium and yeast.

In the present specification, the term "total polyphenol concentration" is a numeric value that is calculated according to the method of Singleton, Ross, et al. (Am. J. Agric. Enol. Vitic. 16: 144 (1965)) based on gallic acid conversion. This method quantizes by conversion of the hydroxyl groups contained in gallic acid, so all phenolic compounds, including flavonoids and nonflavonoids (hydroxycinnamic acids and the like) are quantized. Alcohol concentration (%v/v) is measured according to gas chromatograph analysis described on pages 5-7 of alcohol component in Analytical Methods appointed by the National Tax Administration Agency (the National Tax Administration Agency Orders No.6 revised in 2007 (Heisei 19)). Titratable acidity (ml) is measured according to analysis described on pages 28-29 of total acids (free acids) in Analytical Methods appointed by the National Tax Administration Agency (the National Tax Administration Agency Orders No.6 revised in 2007 (Heisei 19)).

In addition to 3MH precursors, the grape skin extract obtained by the above-described method contains amino acids, sugars, minerals, and the like that are required for fermentation or proliferation of yeast or lactic acid bacteria.

A solution containing grape skin extract is employed as a starting material aqueous solution in the present invention. For example, grape skin extract alone, or grape skin extract suitably diluted with water or the like, can be employed as the solution containing grape skin extract. Alternatively, for example, a known sugar solution, fruit juice, malt juice, or a saccharified solution from a starting material in the form of grain can be mixed with to adjust the concentration of 3MH precursors for use. Still further, additives may be added to the above solution.

To promote fermentation, additives such as acids (for example, lactic acid, malic acid, and tartaric acid), salts (such as table salt, calcium hydrogenphosphate, ammonium phosphate, magnesium sulfate, calcium sulfate, potassium metabisulfite, calcium chloride, magnesium chloride, potassium nitrate, and ammonium sulfate), deacidifiers (such as calcium carbonate and ammonia), and yeast fermentation adjuvants (comprised of some or all from among inactive yeast, yeast extract, yeast cell walls, ammonium phosphate, magnesium sulfate, thiamine hydrochloride, folic acid, calcium pantothenate, niacin, and biotin) can be added.

The concentration of the 3MH precursors of the starting material aqueous solution can be suitably determined taking into account the 3MH concentration of the desired 3MH and alcohol-containing solution, the fermentation conditions, and the like. For example, from the perspective of achieving a higher 3MH concentration in the 3MH and alcohol-containing solution, the concentration of 3MH-*S*-GSH suitably falls within a range of 300 nM and above, the concentration of 3MH-*S*-Cys suitably falls within a range of 70 nM and above, and the combined concentration of 3MH-*S*-GSH and 3MH-*S*-Cys suitably falls within a range of 500 nM and above, respectively based on a Brix 20 percent conversion.

As set forth above, 3MH can be converted to 3MHA, which is an acetic acid ester, by an enzyme such as alcohol acetyl transferase derived from yeast. In the production method of the present invention, a portion of the 3MH that is produced by yeast is sometimes converted to 3MHA during fermentation. Generally, the greater the quantity of 3MH, the greater the quantity of 3MHA can be obtained. Further, the rate of conversion to 3MHA also varies with the type of yeast. As stated above, 3MHA is a substance that makes a major contribution to aroma in the same manner as 3MH. In the production method of the present invention, the 3MH and alcohol-containing solution that is the targeted product can further contain 3MHA. In the present invention, the 3MH and alcohol-containing solution includes solutions that further comprise 3MHA. Still further, in the claims and in the specification, the combined 3MH concentration and 3MHA concentration in the 3MH and alcohol-containing solution that is the targeted product is referred to as the total 3-mercaptohexan-1-ol concentration (sometimes abbreviated to "total 3MH concentration" hereinafter). The 3MH concentration and the 3MHA concentration can be measured by the analysis methods based on the method of T. Tominaga et al. (J. Agric. Food Chem. 1998, 46, 1044-1048; The entire contents of this document are incorporated herein by reference.).

Specifically, a starting material aqueous solution is used with a 3MH-S-GSH concentration falling within a range of 300 to 8,000 nM and a 3MH-*S*-Cys concentration falling within a range of 70 to 11,100 nM, respectively based on a Brix 20 percent conversion. Additionally, the use of a starting material aqueous solution having a combined concentration of 3MH-*S*-GSH and 3MH-*S*-Cys falling within a range of 500 to 15,500 nM is desirable. Each of the lower limits of the ranges of the 3MH-*S*-GSH concentration, 3MH-*S*-Cys concentration, and combined concentration of the two are set from the perspective of obtaining an alcohol-containing solution with a higher concentration of 3MH. Further, each of the upper limits of the ranges of the 3MH-*S*-GSH concentration, 3MH-*S*-Cys concentration, and combined concentration of the two are set from the perspective of an actual availability in the preparation of the grape skin extract contained in the starting material aqueous material. The 3MH-*S*-GSH concentration and 3MH-*S*-Cys concentration can be suitably varied by adjusting the conditions for preparing the grape skin extract (such as the extraction conditions and concentration conditions) when employing grape skin extract alone. When mixing a grape skin extract with another solution, the 3MH-*S*-GSH concentration and 3MH-*S*-Cys concentration of the grape skin extract and its blending ratio with the other solution can be suitably adjusted.

By keeping the 3MH-*S*-GSH concentration within a range of 300 to 8,000 nM in the starting material aqueous solution, the 3MH-*S*-GSH can be converted by lactic acid bacterium fermentation to 3MH-*S*-Cys, raising the 3MH concentration in the alcohol-containing fermentation broth of the final product and yielding an alcohol-containing fermentation broth containing a high concentration of 3MH. Additionally, by keeping the concentration of 3MH-*S*-Cys within a range of 70 to 11,100 nM, an alcohol-containing fermentation broth containing a high concentration of 3MH can be obtained as an alcohol-containing fermentation broth of the final product. Additionally, by keeping the combined concentration of 3MH-S-GSH and 3MH-S-Cys within a range of 500 to 15,500 nM, an alcohol-containing fermentation broth containing a high concentration of 3MH can be obtained. The lower limit of the range of the combined concentration of 3MH-*S*-GSH and 3MH-*S-*Cys is desirably 1,000 nM, preferably 1,500 nM, and more preferably, 2,000 nM. Regardless of the ratio of the 3MH-*S*-GSH concentration and the 3MH-*S*-Cys concentration, the greater the combined concentration of 3MH-*S*-GSH and 3MH-*S-*Cys, the greater the 3MH concentration of the alcohol-containing fermentation broth that can be obtained.

Additionally, the upper limit of the 3MH precursor concentration in the starting material aqueous solution actually depends on the 3MH precursor concentration of the grape skin extract, and can be suitably set based on the 3MH concentration of the targeted 3MH and alcohol-containing solution. From the perspective of greater practicality, the upper limit of the 3MH-*S*-GSH concentration of the starting material aqueous solution is about 3,000 nM, the upper limit of the 3MH-*S*-Cys concentration is about 5,000 nM, and the upper limit of the combined concentration of 3MH-*S*-GSH and 3MH-*S*-Cys is about 8,000 nM. However, these ranges are not intended as limits. By adjusting the preparation conditions of the grape skin extract (such as the extraction conditions and concentration conditions), it is technically possible to obtain a grape skin extract containing higher concentrations of 3MH-*S*-GSH and/or 3MH-*S*-Cys.

By using a starting material aqueous solution containing 3MH precursors within the above-stated ranges, a solution (fermentation broth) containing a high concentration of 3MH can be obtained. For example, it is possible to obtain a fermentation broth (3MH and alcohol-containing solution) with a total 3MH concentration falling within a range of 25 to 5,500 nM. It is possible to enhance the aroma of foods and drinks by adding small or trace amounts of this solution containing a high concentration of 3MH.

Separately, the 3MH precursor concentration of the starting material aqueous solution can be adjusted so that, when based on a Brix 20 percent conversion, for example, the 3MH-*S*-GSH concentration is kept to within a range of less than 300 nM, the 3MH-*S*-Cys concentration to within a range of less than 70 nM, and the combined concentration of 3MH-*S*-GSH and 3MH-*S*-Cys to within a range of less than 500 nM. In this case, although the fermentation conditions are also a factor, the total 3MH concentration of the 3MH and alcohol-containing solution becomes relatively low. An alcohol-containing solution in which the total 3MH concentration is relatively high, as set forth above, can be used by blending it with other drinks, as will be set forth further below. By contrast, an alcohol-containing solution with a relatively low total 3MH concentration can be consumed as is as a drink.

The Brix (%) of the soluble solid component of the starting material aqueous solution can fall within a range of 10 to 28 percent, for example. The Brix (%) range of the starting material aqueous material is suitably determined based on the desired alcohol concentration. The Brix (%) of the starting material aqueous solution can be suitably adjusted based on the Brix (%) of the grape skin extract employed, the fruit juice that is blended in, and the type of additives that are added. The relation between the alcohol concentration and the Brix (%) will be described further below.

### <Fermentation conditions>

The initial pH of the starting material aqueous solution serving as the fermentation starting material suitably falls within a range of pH 3 to 9, desirably pH 4 to 9, and preferably, pH 5 to 9, for example. This is because when the pH drops below 3, the development of lactic acid bacteria and yeast becomes extremely slow, and when the pH exceeds 9, the color of the fermented drink obtained tends to become dark and an unusual odor tends to develop, precluding obtaining of the regular quality. A pH adjusting agent can be employed to adjust the pH. The pH adjusting agent is not specifically limited; known pH adjusting agents can be employed. For example, organic acids such as tartaric acid and malic acid can be employed to lower the pH, and ammonia, calcium carbonate, and the like can be employed to raise the pH.

The fermentation temperature need only be a temperature suited to fermentation or growth of lactic acid bacteria and yeast. For example, a fermentation temperature falling within a range of 10 to 40ºC is suitable, a range of 15 to 35ºC is desirable, and a range of 20 to 30ºC is preferred. This is because when the fermentation temperature drops below 10ºC, the development of lactic acid bacteria becomes extremely slow, and the quantity of remaining 3MH-*S*-GSH that is not converted to 3MH-*S*-Cys increases. As a result, the proportion that is consumed by the yeast increases. When the fermentation temperature exceeds 40ºC, the development of the yeast deteriorates and an odor results when the fermented drink is heated, compromising quality. The fermentation temperature may be identical for fermentation by the lactic acid bacteria and fermentation by yeast, or different temperatures may be employed. The use of a single temperature for both facilitates producing operations. However, employing a temperature that is suited to fermentation and growth of lactic acid bacteria for the fermentation by lactic acid bacteria and employing a temperature that is suited to fermentation and growth of yeast for the fermentation by yeast further optimizes producing conditions.

When to inoculate with yeast depends on conditions such as the initial pH of the fermentation starting material, the fermentation temperature, and the like. However, a range of 0 to 6 days after inoculation with lactic acid bacteria is mandatory, a range of 1 to 5 days is desirable, and a range of 2 to 4 days is preferable. When inoculation with yeast is conducted before inoculation with lactic acid bacteria, the yeast ends up consuming the 3MH-S-GSH before the 3MH-S-GSH contained in the fermentation starting material can be converted to 3MH-S-Cys by the lactic acid bacteria. As a result, there is a problem in that a high concentration of 3MH cannot be achieved. Further, when more than 6 days pass by following inoculation with lactic acid bacteria, the risk of contamination of the fermentation broth by other, undesirable bacteria increases.

The fermentation period is suitably set based on the varieties of lactic acid bacteria and yeast employed, the pH, the fermentation temperature and the alcohol concentration being targeted. However, a period of 2 to 20 days is also practicable. When fermentation is conducted for a shorter period than this period, 3MH is not adequately released. When conducted for a longer period than this period, the 3MH in the fermentation broth is oxidized, increasing the risk of loss of aroma. The fermentation period is preferably 4 to 15 days. The fermentation period can also be suitably determined by taking into account the timing of inoculation with yeast and the fermentation period required after inoculation with yeast.

The lactic acid bacterium employed in the present invention is a lactic acid bacterium that is capable of converting 3MH-*S*-GSH to 3MH-*S*-Cys. Examples of lactic acid bacteria that are capable of converting 3MH-*S*-GSH to 3MH-*S*-Cys are lactic acid bacteria of the genus Lactobacillus (for example, *Lactobacillus plantarum, Lactobacillus pentosus, Lactobacillus brevis, Lactobacillus delbruekii subsp*. *delbrueckii, Lactobacillus delbruekii subsp. bulgaricus*, *Lactobacillus mali, Lactobacillus acidophilus, Lactobacillus rhamnosus, Lactobacillus hilgardii, Lactobacillus kefiri, Lactobacillus fructosus, Lactobacillus acidipiscis*, *Lactobacillus fermentum, Lactobacillus paracasei subsp. tolerans*, and *Lactobacillus sakei subsp. sakei*); lactic acid bacteria of the genus Leuconostoc (for example, *Leuconostoc mesenteroides*); and lactic acid bacteria of the genus Pediococcus (for example, *Pediococcus pentosaceus*). The use of *Lactobacillus plantarum*, *Lactobacillus pentosus, Lactobacillus mali,* and *Lactobacillus hilgardii,* which have a strong conversion ability, is desirable. A single variety of lactic acid bacterium may be inoculated, or multiple varieties may be employed in combination. The lactic acid bacterium can be inoculated in a range of about 10⁵ to 10⁸ cfu/mL, for example. Lactic acid bacteria of the genus Oenococus that are employed in malo-lactic fermentation (such as *Oenococus oeni*) only have an extremely weak ability to convert 3MH-*S*-GSH to 3MH-*S*-Cys. Thus, they are not effective in improvement of conversion into 3MH.

The yeast employed in the present invention is not specifically limited other than that it be a yeast that can be employed in the production of common fermented drinks. Examples are yeasts of the genus Saccharomyces (such as *Saccharomyces cerevisiae* and *Saccharomyces bayanus*). A single variety of yeast may be inoculated, or multiple varieties may be employed in combination. Yeasts of the genus Kluyveromyces (for example, *Kluyveromyces thermotolerans*) and yeasts of the genus Torulaspora (for example, *Torulaspora delbrueckii*) can be mixed with yeasts of the genus Saccharomyces for use. The yeast can be inoculated in a range of about 10⁵ to 10⁸ cfu/mL.

The alcohol concentration of the fermentation broth obtained is not specifically limited. A concentration of about 0.5 to 14 percent is desirable and about 5 to 12 percent is preferable. The Brix (%) of the starting material aqueous solution is desirably about 10 to 25 percent to obtain a fermented drink with the targeted alcohol concentration in the form of a fermentation broth. Further, the alcohol concentration can be suitably measured during the course of fermentation and fermentation can be halted when the targeted alcohol concentration has been reached to obtain a fermentation broth of the desired alcohol concentration. A known method can be applied to stop fermentation. For example, to inhibit development of the yeast and lactic acid bacteria, 50 to 200 ppm of sulfurous acid can be added; or the temperature can be decreased. Alternatively, one of methods such as filtering the supernatant to remove the microbes (for example, by filtration with a filter or diatomaceous earth) and employing a centrifuge at about 3,500 to 12,000 rpm for about 5 minutes to 4 hours to separate and remove the yeast and lactic acid bacteria can be employed.

To remove components that are sources of turbidity, such as pectin, proteins, and metals, the 3MH-containing solution can be subjected to a known method of clarification as needed once fermentation has ended. For example, when employing the fermentation broth obtained by the production method of the present invention as is as a drink, when the drink is a fruit wine in terms of the Liquor Tax Law, clarifying agents such as gelatin, albumin, bentonite, pectinase, silicon dioxide, and polyvinyl polypyrrolidone can be employed. When the fermentation broth that is obtained by the production method of the present invention is to be employed as an aromatic agent, known clarifying methods can also be applied.

### <The product>

An alcohol-containing fermentation broth that comprises 3MH can be manufactured by the production method of the present invention. The total 3MH concentration of the fermentation broth can be suitably adjusted by means of the 3MH precursor concentration in the starting materials, the fermentation conditions, and the like. For example, when fermenting a fermentation starting material with a combined concentration of 3MH precursors of 500 to 15,500 nM with a lactic acid bacterium and yeast under the specific fermentation conditions of the present invention, a 3MH-containing fermentation broth with a total 3MH concentration of 25 to 5,500 nM can be obtained. The desirable range of the 3MH concentration varies with the application. For example, among 3MH-containing fermentation broths thus obtained, 3MH-containing fermentation broths with relatively low total 3MH concentrations (for example, falling within a range of 25 to 150 nM) can be employed as highly desirable fermented beverages with good 3MH aromas without adjustment such as blending with other drinks, as well as being employed as starting materials for blending with other drinks. Fermentation broths of extremely good aroma properties having a total 3MH concentration of 150 nM or more can be employed as aromatic agents and the like. When a 3MH-containing fermentation broth is employed as an aromatic agent, the total 3MH concentration desirably falls within a range of 200 to 4,500 nM, preferably a range of 250 to 3,500 nM.

As set forth above, by fermenting a fermentation starting material having a combined 3MH precursor concentration of less than 500 nM with a lactic acid bacterium and yeast under the specified fermentation conditions of the present invention, it is possible to obtain a 3MH-containing fermentation broth having a total 3MH concentration falling within a range of 1 nM or more but less than 25 nM. This 3MH-containing fermentation broth can also be employed as a highly desirable fermented drink with a good 3MH aroma without adjustment such as blending with other beverages.

### [Method of production of a drink with an improved aroma]

The present invention includes a method of production of a drink as defined in claim 12 with an improved aroma by mixing the alcohol-containing fermentation broth with a total 3MH concentration of 150 nM or greater obtained by the above-described method of the present invention with a drink to obtain a drink with an increased 3MH content. The drink that is employed in this mixing can be wine, for example, or a beverage other than wine. The drink of increased 3MH content and enhanced aroma can be adjusted to have a total 3MH concentration falling within a range of 1 to 150 nM, desirably a range of 2 to 100 nM, for example.

### [The aromatic agent]

An aromatic agent is also described in the form of an aqueous solution containing 3MH and alcohol that may further contain 3MHA, employing an alcohol-containing fermentation broth with a total 3MH concentration falling within a range of 150 to 5,500 nM. The aromatic agent of the present invention desirably further contains 3MHA. The aromatic agent can be produced by the above-described production method of the present invention. The total 3MH concentration of the aromatic agent desirably falls within a range of 200 to 4,500 nM, preferably a range of 250 to 3,500 nM. By way of example, the alcohol concentration of the aqueous solution falls within a range of 0.5 to 14 percent, for example. A range of 5 to 12 percent is desirable from the perspective of storage properties and ease of production. The 3MH and alcohol contents of the aromatic agent can be suitably adjusted by dilution or concentration. Water, alcohol, an alcohol-containing solution, or the like can be employed in dilution.

Since the aromatic agent of the present invention has a high total 3MH concentration, it can be employed as an aromatic agent in food and drink. An example of a food or drink in which it can be employed is wine. Foods in which the aromatic agent can be employed are snacks, cakes, and desserts, as well as foods and drinks in which wine is employed as a starting material. The aromatic agent of the present invention is produced using natural starting materials in the form of naturally occurring lactic acid bacteria and yeasts, and thus affords the advantage of being highly safe.

### <The alcoholic beverage and method for production the same>

The grape skin extract produced as set forth above can be mixed with grape juice and fermented with yeast in a common manner to produce alcohol and produce a fruit liquor with a good 3-mercaptohexan-1-ol aroma. Examples of the yeast are yeasts of the genus Saccharomyces (such as *Saccharomyces cerevisiae*). In addition to yeasts of the genus Saccharomyces, yeasts of the genus Kluyveromyces (such as *Kluyveromyces thermotolerans*) and yeasts of the genus Torulaspora (such as *Torulaspora delbrueckii*) can be mixed in for use.

The mixing ratio of the grape skin extract to the grape juice serving as fermentation starting materials is not specifically limited, but suitably falls within a range of from 5:95 to 100:0. For example, in the case of a grape skin extract containing 5,000 nM (approximately equivalent to 2,000 ppb) of 3-mercaptohexan-1-ol precursor, the mixing ratio of grape skin extract to grape juice can be 5:95 and fermentation can be done to obtain a fruit liquor manifesting a good degree of 3-mercaptohexan-1-ol aroma. Fruit liquors manifesting a high degree of 3-mercaptohexan-1-ol aroma by fermentation with just grape skin extract can be blended with other fruit liquors as needed to adjust the flavor.

### [Embodiments]

The present invention is described in greater detail below through embodiments. The present invention is not limited to the embodiments.

In the present embodiments, the total 3MH concentration (the 3MH concentration and 3MHA concentration combined) is indicated as the sum of the 3MH and 3MHA concentrations as measured by the analysis method set forth below, which is based on the method of T. Tominaga et. al (J. Agric. Food Chem. 1998, 46, 1044-1048).

### (Analysis method)

The 3MH (molecular weight 134) and 3MHA (molecular weight 176) in the sample were selectively extracted with p-hydroxymercuribenzoate and then concentrated under a nitrogen gas flow. An internal standard in the form of 4-methoxy-2-methyl-4-mercaptobutane was employed. The sample that had been thus concentrated was tested in GC/MS systems (Agilent Technologies 6890N GC system and 5973MSD system). The column employed was a DB-XLB (50 m x 0.25 micrometer x 0.25 micrometer) made by J&W Scientific. A single GC cycle consisted of maintaining a temperature of 40ºC for 5 minutes, raising the temperature by 4ºC/minute to 170ºC, raising the temperature by 8ºC/minute to 230ºC, and finally maintaining the temperature for 5 minutes. A mass spectrum of each specimen was confirmed in SCAN mode, a switch was made to SIM mode, and quantization was conducted at m/z 134 for 3MH and m/z 116 for 3MHZ.

The 3MH precursors in the present invention are 3MH-S-GSH (molecular weight 407) and 3MH-*S*-Cys (molecular weight 221), as set forth above. The concentration of the 3MH precursors is given as the sum of the concentration of these two substances as measured by the analysis given below.

### (Analysis method)

The sample was diluted to a suitable ratio with a 10 percent (v/v) methanol aqueous solution containing 0.1 percent (v/v) formic acid, the dilution was filtered with a 0.45 micrometer filter, and an LC/MS/MS system was used for quantization. The preparations used to plot a calibration curve were obtained by organic synthesis as follows: 3MH-S-GSH was obtained by the method of C. P. des Gachons, T. Tominaga, et al. (J. Agric. Food Chem., 2002, 50, 4076-4079) and 3MH-*S*-Cys was obtained by the method of C. Thibon, S. Shinkaruk, et al. (J. Chromatogr. A, 2008, 1183, 150-157).

### [Equipment employed]

3200 QTRAP LC/MS/MS system (Applied Biosystems)

### [LC/MS/MS conditions]

Interface: Turbo V source
Ionization mode: ESI (positive mode)
Ion source parameters: curtain gas 15 psi, collision gas 3 psi, ions spray voltage 5,500 V, temperature 700ºC, ion source gas 170 ps, ion source gas 270 psi, interface heater ON, measurement mode: MRM mode
Selection ions: 3MH-S-GSH m/z 408.2 -> 162.1 (collision energy 27 V), 3MH-S-Cys m/z 222.2 -> 83.2 (collision energy 19 V)

### [LC conditions]

Column: Atlantis T3, 3 micrometers, 2.1 x 150 mm (Waters)
Column temperature: 40ºC
Quantity introduced: 10 microliter
Mobile phase A: water containing 0.1 percent (v/v) formic acid
Mobile phase B: acetonitrile containing 0.1 percent (v/v) formic acid
Flow rate: 0.2 mL/min
Gradient: Increased over 10 minutes from a mobile phase A and mobile phase B mixing ratio of mobile phase A: mobile phase B = 90:10 to a mobile phase A: mobile phase B = 0:100, after which returned to mobile phase A: mobile phase B = 90:10 and maintained for 5 minutes.

### Embodiment 1

### Evaluation of the ability to convert 3MH-S-GSH to 3MH-S-Cys of individual varieties of lactic acid bacteria using MRS medium (1)

A 55 g quantity of Lactobacilli MRS broth (Difco) was mixed with 1L of ion-exchanged water and sterilized in an autoclave to prepare MRS medium (pH 6.5). 3MH-S-GSH prepared by organic synthesis in a clean bench was dissolved therein to 1,250 nM and mixed. This mixture was then charged in 10 mL quantities to sterilized 15 mL Falcon tubes. The tubes were then inoculated at about 1.0 x 10⁶ cfu/mL with the various strains of lactic acid bacteria indicated in Table 1, and statically cultured at 30ºC for 3 days. The concentrations of the substrate in the form of 3MH-*S*-GSH and the product in the form of 3MH-*S*-Cys were analyzed by the above-mentioned analysis method. The results are given in Table 1.

**Table 1]**

| Strain Variety | 3MH-S-GSH Remaining conc. (nM) | 3MH-S-Cys Produced conc. (nM) |
|---|---|---|
| *Lactobacillus pentosus* | 643.0 | 256.7 |
| *Lactobacillus plantarum* | 1121.5 | 56.5 |
| *Lactobacillus plantarum* | 1101.9 | 55.1 |
| *Lactobacillus plantarum* | 1185.3 | 49.7 |
| *Lactobacillus plantarum* | 1158.3 | 45.0 |
| *Lactobacillus plantarum* | 1155.9 | 37.6 |
| *Lactobacillus plantarum* | 1158.3 | 37.4 |
| *Leuconostoc mesenteroides* | 1133.8 | 25.7 |
| *Lactobacillus plantarum* | 1175.5 | 18.0 |
| *Lactobacillus plantarum* | 1205.0 | 11.7 |
| *Lactobacillus plantarum* | 1195.1 | 8.9 |
| *Pediococcus pentosaceus* | 1229.5 | 6.7 |

As a result, lactic acid bacteria of the genus Lactobacillus in the form of *Lactobacillus plantarum* and *Lactobacillus pentosus*, lactic acid bacteria of the genus Leuconostoc in the form of *Leuconostoc mesenteroides*, lactic acid bacteria of the genus Pedicoccus in the form of *Pedicoccus pentosaceus* had the ability to convert 3MH-*S*-GSH to 3MH-*S*-Cys. Of these, *Lactobacillus pentosus* and *Lactobacillus plantarum* had the greatest conversion ability.

### Embodiment 2

### Evaluation of the ability to convert 3MH-S-GSH to 3MH-S-Cys of individual varieties of lactic acid bacteria using MRS medium (2)

MRS medium (pH 6.5) was prepared in the same manner as in Embodiment 1, 3MH-*S*-GSH prepared by organic synthesis was dissolved therein to 1,000 nM. This mixture was then charged in 10 mL quantities to sterilized 15 mL Falcon tubes. The tubes were then inoculated at about 1.0 x 10⁶ cfu/mL with the various strains of lactic acid bacteria indicated in Table 2, and statically cultured at 30ºC for 3 days. The concentrations of the substrate in the form of 3MH-*S*-GSH and the product in the form of 3MH-*S*-Cys were analyzed by the same method as of Embodiment 1. The results are given in Table 2.

**[Table 2]**

| Strain's name | Strain Variety | 3MH-S-GSH Remaining conc. (nM) | 3MH-S-Cys Produced conc.(nM) |
|---|---|---|---|
| NBRC3202 | *Lactobacillus delbruekii subsp.delbrueckii* | 835.0 | 77.0 |
| NBRC13953 | *Lactobacillus delbruekii subsp.bulgaricus* | 780.2 | 64.1 |
| NBRC102159 | *Lactobacillus mali* | 529.4 | 63.8 |
| THT030702(Made by THT) | *Lactobacillus plantarum* | 931.4 | 35.1 |
| NBRC13951 | *Lactobacillus acidophilus* | 973.9 | 14.0 |
| NBRC14710 | *Lactobacillus rhamnosus* | 992.6 | 7.5 |
| NBRC15886 | *Lactobacillus hilgardii* | 946.9 | 5.2 |
| NBRC15888 | *Lactobacillus kefiri* | 947.7 | 2.6 |
| NBRC3516 | *Lactobacillus fructosus* | 986.1 | 2.3 |
| NBRC102164 | *Lactobacillus acidipiscis* | 983.7 | 2.1 |
| NBRC15885 | *Lactobacillus fermentum* | 951.0 | 2.0 |
| NBRC15906 | *Lactobacillus paracasei subsp.tolerans* | 988.6 | 1.4 |
| NBRC15893 | *Lactobacillus sakei subsp.sakei* | 972.2 | 1.0 |

As a result, all of the lactic acid bacteria of the genus Lactobacillus listed in Table 2 had the ability to convert 3MH-*S*-GSH to 3MH-*S*-Cys. Of these, *Lactobacillus delbruekii subsp. delbrueckii, Lactobacillus delbruekii subsp. bulgaricus, Lactobacillus mali,* and *Lactobacillus plantarum* had the greatest conversion ability.

### Embodiment 3

### Evaluation of the ability to convert 3MH-S-GSH to 3MH-S-Cys of individual varieties of lactic acid bacteria using grape skin extract (1)

Conversion 1 by various lactic acid bacteria strains in grape skin extract Grape skins with a water content of 66.8 percent obtained by pressing grapes (Chardonnay variety) with a membrane press (made by Bucher Vaslin) were placed in frozen storage for one month. A 3.0 kg (two-fold quantity) of water was added to 1.5 kg of the frozen grape skins, soaking was conducted at 20ºC for 24 hours, pressing was conducted with a mechanically operated juicer, and a Brix 5 percent grape skin extract was obtained. A 500 ppm quantity of Bentonite was added to the grape skin extract obtained, the mixture was stirred for 30 minutes, and the mixture was left standing at 5ºC for 24 hours. The supernatant was filtered through diatomaceous earth, concentrated under reduced pressure at an interior temperature of 60ºC with a flash evaporator, and concentrated to Brix 50 percent. The 3MH precursor concentration and total polyphenol concentration of the grape skin extract was measured and calculated based on a Brix 20 percent conversion, yielding a 3MH precursor concentration of 9,014.2 nM (3MH-*S*-Cys: 2,895.8 nM, 3MH-*S*-GSH: 6,118.4 nM) and total polyphenol concentration of 1,414 ppm in the grape skin extract.

This grape skin extract was adjusted to Brix 20 percent as a fermentation starting material. At that time, the 3MH precursor content in the fermentation starting material was 9,014.2 nM (3MH-S-Cys: 2,895.8 nM, 3MH-S-GSH: 6,118.4 nM) and the total polyphenol concentration was 1,414 ppm. To this were added 100 mg/L of the fermentation adjuvant Fermaid K (Lallemand) and 1 g/L of ammonium dihydrogen phosphate. The mixture was measured out in 100 mL quantities and charged to 180 mL glass containers. At the time, the pH was 4.4. About 1.0 x 10⁷ cfu/mL of the various lactic acid bacteria indicated in Table 3 were added and the mixture was statically cultured at 20ºC for 2 days. Following culturing, the concentrations of the substrate in the form of 3MH-*S*-GSH and the product in the form of 3MH-*S*-Cys were analyzed by the same method as in Embodiment 1. The amount of 3MH-*S*-Cys produced was calculated by subtracting the concentration of 3MH-*S*-Cys in the fermentation starting material prior to culturing from the 3MH-*S*-Cys concentration in the fermentation broth following culturing. The results are given in Table 3.

**[Table 3]**

| Strain's name | Strain Variety | 3MH-S-GSH (nM) | 3MH-S-Cys (nM) | 3MH-S-Cys Produced conc. (nM) |
|---|---|---|---|---|
| NBRC101978 | *Lactobacillus plantarum* | 1753.3 | 3764.6 | 868.8 |
| Viniflora plantarum (Christian Hansen) | *Lactobacillus plantarum* | 2765.5 | 3695.9 | 800.1 |
| NBRC101977 | *Lactobacillus plantarum* | 1744.2 | 3666.4 | 770.6 |

As a result, all of the *Lactobacillus plantarum* subspecies listed in Table 3 had the ability to convert 3MH-*S*-GSH to 3MH-*S*-Cys.

### Embodiment 4

### Evaluation of the ability to convert 3MH-S-GSH to 3MH-S-Cys of individual varieties of lactic acid bacteria using grape skin extract (2)

Grape skins with a water content of 66.8 percent obtained by pressing grapes (Chardonnay variety) with a membrane press (made by Bucher Vaslin) were placed in frozen storage for 30 to 50 days. To 8 t of the frozen grape skins was added 16 t (a two-fold quantity) of water and the mixture was soaked for 3 hours while being rotated in a membrane press (made by Bucher Vaslin) at 15 to 20ºC. Pressing was then conducted to obtain a Brix 4.6 percent grape skin extract. To promote settling of the turbid components in the grape skin extract obtained, 1,000 ppm of polyvinyl polypyrrolidone (PVPP) and 500 ppm of Bentonite were added, the mixture was stirred for 30 minutes, and the mixture was left standing at 5ºC for 24 hours. The supernatant was centrifuged (4,000 rpm), sterilized by heating at 95ºC, and concentrated under reduced pressure at a temperature of 30 to 40ºC in a vacuum thin-film circulating concentrator to Brix 50 percent. The 3MH precursor concentration and total polyphenol concentration of the grape skin extract were measured and calculated based on a Brix 20 percent conversion. As a result, the 3MH-S-GSH concentration was 1,960.8 nM (800 ppb) (A), and the 3MH-S-Cys concentration was 5203.6 nM (1150 ppb) (B). The concentration of 3-mercaptohexanol precursors was thus 7,164.4 nM (1,950 ppb) ((A) + (B)), and the total polyphenol concentration was 568 ppm.

This grape skin extract was adjusted to about Brix 20 percent (pH 4.2) and employed as a fermentation starting material. At the time, the concentration of 3MH precursors contained in the fermentation starting water was 7,164.4 nM (3MH-*S-*Cys: 5,203.6 nM, 3MH-*S*-GSH: 1,960.8 nM) and the total polyphenol concentration was 568 ppm. The fermentation starting material was measured out into 300 mL quantities and charged to 360 mL glass containers. The lactic acid bacteria indicated in Table 4 were added in quantities of about 1.0 x 10⁷ cfu/mL and the mixture was statically cultured at 30ºC for 2 days. Following culturing, the concentrations of the substrate in the form of 3MH-*S*-GSH and the product in the form of 3MH-*S*-Cys were analyzed by the same method as in Embodiment 1. The amount of 3MH-*S*-Cys produced was calculated by subtracting the concentration of 3MH-S-Cys in the fermentation starting material prior to culturing from the 3MH-*S-*Cys concentration in the fermentation broth following culturing. The results are given in Table 4.

**[Table 4]**

| Strain's name | Strain Variety | 3MH-S-GSH (nM) | 3MH-S-Cys (nM) | 3MH-S-Cys Produced conc. (nM) |
|---|---|---|---|---|
| NBRC15886 | *Lactobacillus hilgardii* | 298.2 | 6425.7 | 1221.7 |
| THT030702 (Made by THT) | *Lactobacillus plantarum* | 21.7 | 6199.5 | 995.5 |
| NBRC102159 | *Lactobacillus mali* | 259.0 | 5475.5 | 271.5 |
| NBRC102164 | *Lactobacillus acidipiscis* | 1300.7 | 5385.0 | 181.0 |
| NBRC3202 | *Lactobacillus delbruekii subsp. delbrueckii* | 1982.1 | 5294.5 | 90.5 |

As a result, all of the lactic acid bacteria of the genus Lactobacillus listed in Table 4 had the ability to convert 3MH-*S*-GSH to 3MH-*S*-Cys. Of these, *Lactobacillus hilgardii, Lactobacillus plantarum,* and *Lactobacillus mali* had the greatest conversion ability.

### Embodiment 5

### Producing high 3MH-content drinks employing grape skin extract (Chardonnay variety) as fermentation starting material -- An examination of the optimal inoculation times for lactic acid bacteria and yeast

In the same manner as in Embodiment 4, grape skins were extracted with water and concentrated to obtain a grape skin extract. This was adjusted to about Brix 20 percent (pH 4.2) and employed as a fermentation starting material. At the time, the concentration of 3MH precursors contained in the fermentation starting water was 8,028.1 nM (3MH-S-Cys: 6,244.3 nM, 3MH-S-GSH: 1,784.8 nM) and the total polyphenol concentration was 625 ppm.

A test zone ((Embodiment 5-6) in which a 500 mL quantity of this fermentation starting material was inoculated with just yeast at a fermentation temperature of 20ºC, a test zone (Embodiment 5-1) in which the fermentation starting material was inoculated simultaneously with a lactic acid bacterium and yeast, a test zone (Embodiment 5-2) in which the fermentation starting material was inoculated with a lactic acid bacterium followed one day layer by inoculation with yeast, a test zone (Embodiment 5-3) in which the fermentation starting material was inoculated with a lactic acid bacterium followed two days later by inoculation with yeast, a test zone (Embodiment 5-4) in which the fermentation starting material was inoculated with a lactic acid bacterium followed four days later by inoculation with yeast, and a test zone (Embodiment 5-5) in which the fermentation starting material was inoculated with a lactic acid bacterium followed six days later by inoculation with yeast were provided. Static fermentation was conducted for 13 to 15 days. Subsequently, centrifugal separation was conducted to remove the yeast and lactic acid bacterium, yielding various fermented drinks. The lactic acid bacteria employed (*Lactobacillus plantarum: Viniflora plantarum* (prepared by Christian Hansen)) was inoculated at about 7.0 x 10⁶ cfu/mL and the yeast (*Saccharomyces cerevisiae:* CY3079 (prepared by Lallemand) was inoculated at about 1.0 x 10⁶ cfu/mL. The 3MH and 3MHA concentrations of the drinks obtained were measured. The ratios of the total 3MH concentration in the fermented drinks obtained were calculated for the 3MH precursor concentrations of the fermentation starting materials, and 3MH conversion rates were calculated. The results are given in Table 5.

**[Table 5]**

| Embodiment | Inoculation timing with Lactic acid bacterium | Inoculation timing with yeast | Initial pH | Fermentation temp. (°C) | Fermentation period (days) | Alcohol conc. (%v/v) | 3MH (nM) (A) | 3MHA (nM) (B) | Total 3MH concentration (nM) {(A)+(B)} | 3MH Conversion (%mol/mol) |
|---|---|---|---|---|---|---|---|---|---|---|
| 5-6 | Not used | Just after preparation of fermentation starting material | 4.2 | 20 | 13 | 10.5 | 84.7 | 1.3 | 85.9 | 1.07 |
| 5-1 | Just after preparation of fermentation starting material | 0 day after lactic acid bacterium addition | 4.2 | 20 | 13 | 9.7 | 123.8 | 3.5 | 127.3 | 1.59 |
| 5-2 | Just after preparation of fermentation starting material | 1 day after lactic acid bacterium addition | 4.2 | 20 | 13 | 10.2 | 186.0 | 4.3 | 190.3 | 2.37 |
| 5-3 | Just after preparation of fermentation starting material | 2 day after lactic acid bacterium addition | 4.2 | 20 | 13 | 10.1 | 223.6 | 4.5 | 228.1 | 2.84 |
| 5-4 | Just after preparation of fermentation starting material | 4 day after lactic acid bacterium addition | 4.2 | 20 | 13 | 9.7 | 344.0 | 4.6 | 348.6 | 4.34 |
| 5-5 | Just after preparation of fermentation starting material | 6 day after lactic acid bacterium addition | 4.2 | 20 | 16 | 10.1 | 252.1 | 5.2 | 257.3 | 3.20 |

As indicated in Table 5, the total 3MH concentrations of embodiments 5-1 to 5-5 were higher and the 3MH conversion rates greater than in Embodiment 5-6. Of these, Embodiments 5-3, 5-4, and 5-5 exhibited markedly higher 3MH conversion rates.

### Embodiment 6

### Producing high 3MH-content drinks employing grape skin extract (Chardonnay variety) as fermentation starting material -- An examination of the dependence on fermentation temperature

In the same manner as in Embodiment 4, grape skins were extracted with water and concentrated to obtain a grape skin extract. This was adjusted to Brix 22 percent (pH 4.2) and employed as a fermentation starting material. At that time, the 3MH precursor concentration of the fermentation starting material was 6216.5 nM (3MH-S-Cys: 4,796.4 nM, 3MH-S-GSH: 1,420.1 nm) and the total polyphenol concentration was 625 ppm. Into 750 mL glass containers were poured 500 mL quantities of the fermentation starting material. In one group, at various fermentation temperatures of 10 to 40ºC, yeast (*Saccharomyces cerevisiae:* CY3079 (prepared by Lallemand)) was inoculated at about 2.0 x 10⁶ cfu/mL and fermentation was conducted for 6 to 18 days (Embodiments 6-1a to 6-4a). In another group, a lactic acid bacterium (*Lactobacillus plantarum: Viniflora plantarum* (prepared by Christian Hansen)) was inoculated at about 6.0 x 10⁷ cfu/mL, and two days later, yeast *(Saccharomyces cerevisiae:* CY3079 (prepared by Lallemand)) was inoculated at about 2.0 x 10⁶ cfu/mL and static fermentation was conducted for 6 to 18 days (Embodiments 6-1b to 6-4b). Subsequently centrifugal separation was employed to remove the yeast and lactic acid bacterium, yielding various fermented drinks. The 3MH and 3MHA concentrations of the fermented drinks obtained were measured. Further, the ratio of the total 3MH concentration in the fermented drink obtained was calculated for the 3MH precursor concentration contained in the fermentation starting material and the 3MH conversion rate was calculated. The results are given in Table 6.

**[Table 6]**

| Embodiment | Inoculation timing with Lactic acid bacterium | Inoculation timing with yeast | Initial pH | Fermentation temp.(°C) | Fermentation period (days) | Alcohol conc. (%v/v) | 3MH (nM) (A) | 3MHA (nM) (B) | Total 3MH concentration (nM){(A)+(B)} | 3MH Conversion (%mol/mol) |
|---|---|---|---|---|---|---|---|---|---|---|
| 6-1a | Not used | Just after preparation of fermentation starting material | 4.2 | 10 | 19 | 10.8 | 96.7 | 0.7 | 97.4 | 1.57 |
| 6-2a | Not used | Just after preparation of fermentation starting material | 4.2 | 20 | 10 | 11.5 | 227.2 | 6.8 | 234.0 | 3.76 |
| 6-3a | Not used | Just after preparation of fermentation starting material | 4.2 | 30 | 6 | 11.1 | 205.3 | 6.1 | 211.4 | 3.40 |
| 6-4a | Not used | Just after preparation of fermentation starting material | 4.2 | 40 | 5 | 7.3 | 89.0 | 0.9 | 89.9 | 1.45 |
| 6-1b | Just after preparation of fermentation starting material | 2 days after lactic acid bacterium inoculation | 4.2 | 10 | 20 | 8.7 | 109.1 | 1.0 | 110.1 | 1.77 |
| 6-2b | Just after preparation of fermentation starting material | 2 days after lactic acid bacterium inoculation | 4.2 | 20 | 12 | 10.7 | 435.5 | 21.6 | 457.1 | 7.35 |
| 6-3b | Just after preparation of fermentation starting material | 2 days after lactic acid bacterium inoculation | 4.2 | 30 | 7 | 10.6 | 1291.0 | 40.9 | 1331.9 | 21.43 |
| 6-4b | Just after preparation of fermentation starting material | 2 days after lactic acid bacterium inoculation | 4.2 | 40 | 7 | 8.9 | 149.0 | 2.7 | 151.6 | 2.44 |

As indicated in Table 6, the fermented drinks fermented using lactic acid bacterium and yeast exhibited higher 3MH conversion rates than the fermented drinks fermented with just yeast at each of the fermentation temperatures. Of these, Embodiments 6-2b and 6-3b exhibited markedly higher 3MH conversion rates.

### Embodiment 7

### Producing high 3MH-content drinks employing grape skin extract (Chardonnay variety) as fermentation starting material -- An examination of the dependence on pH

In the same manner as in Embodiment 4, grape skins were extracted with water and concentrated to obtain a grape skin extract. This was adjusted to Brix 20 percent and employed as a fermentation starting material. At that time, the 3MH precursor concentration of the fermentation starting material was 5669.4 nM (3MH-S-Cys: 4,416.3 nM, 3MH-S-GSH: 1,253.1 nm) and the total polyphenol concentration was 568 ppm. Sodium hydroxide or hydrochloric acid were used to adjust 500 mL quantities of this fermentation starting material to initial pH levels of 3 to 9, after which they were poured into 750 mL glass containers. In one group, at a fermentation temperature of 20ºC, yeast (*Saccharomyces cerevisiae:* CY3079 (prepared by Lallemand)) was inoculated at about 2.0 x 10⁶ cfu/mL and fermentation was conducted for 6 to 18 days (Embodiments 7-1a to 7-4a). In another group, lactic acid bacterium (*Lactobacillus plantarum: Viniflora plantarum* (prepared by Christian Hansen)) was inoculated at about 6.0 x 10⁷ cfu/mL, and two days later, yeast (*Saccharomyces cerevisiae:* CY3079 (prepared by Lallemand)) was inoculated at about 2.0 x 10⁶ cfu/mL and static fermentation was conducted for 6 to 18 days (Embodiments 7-1b to 7-4b). Subsequently centrifugal separation was employed to remove the yeast and lactic acid bacterium, yielding various fermented drinks. The 3MH and 3MHA concentrations of the fermented drinks obtained were measured. Further, the ratio of the total 3MH concentration in the fermented drink obtained was calculated for the 3MH precursor concentration contained in the fermentation starting material and the 3MH conversion rate was calculated. The results are given in Table 7.

**[Table 7]**

| Embodi -ment | Inoculation timing with Lactic acid bacterium | Inoculation timing with yeast | Initial pH | Fermentation temp. (°C) | Fermentation period (days) | Alcohol conc. (%v/v) | 3MH (nM) (A) | 3MHA (nM) (B) | Total 3MH concentra tion (nM) {(A)+(B)} | 3MH Conversion (%mol/mol) |
|---|---|---|---|---|---|---|---|---|---|---|
| 7-1a | Not used | Just after preparation of fermentation starting material | 3 | 20 | 10 | 10.6 | 169.9 | 3.4 | 173.3 | 3.06 |
| 7-2a | Not used | Just after preparation of fermentation starting material | 5 | 20 | 10 | 10.2 | 162.0 | 4.2 | 166.2 | 2.93 |
| 7-3a | Not used | Just after preparation of fermentation starting material | 7 | 20 | 10 | 10.7 | 135.5 | 2.7 | 138.2 | 2.44 |
| 7-4a | Not used | Just after preparation of fermentation starting material | 9 | 20 | 10 | 10.4 | 127.0 | 2.5 | 129.5 | 2.28 |
| 7-1b | Just after preparation of fermentation starting material | 2 days after lactic acid bacterium inoculation | 3 | 20 | 12 | 10.4 | 193.1 | 4.0 | 197.1 | 3.48 |
| 7-2b | Just after preparation of fermentation starting material | 2 days after lactic acid bacterium inoculation | 5 | 20 | 12 | 9.8 | 765.1 | 19.3 | 784.4 | 13.84 |
| 7-3b | Just after preparation of fermentation starting material | 2 days after lactic acid bacterium inoculation | 7 | 20 | 12 | 9.5 | 589.5 | 16.1 | 605.6 | 10.68 |
| 7-4b | Just after preparation of fermentation starting material | 2 days after lactic acid bacterium inoculation | 9 | 20 | 12 | 9.6 | 905.6 | 32.1 | 937.7 | 16.54 |

As indicated in Table 7, the fermented drinks fermented with lactic acid bacterium and yeast exhibited higher 3MH conversion rates than the fermented drinks fermented with just yeast at each of the initial pH levels. Of these, Embodiments 7-2b, 7-3b, and 7-4b exhibited markedly higher 3MH conversion rates.

### Embodiment 8

### Producing high 3MH-content drinks employing grape skin extract (Chardonnay variety) as fermentation starting material -- A comparison with Oenococus oeni

In the same manner as in Embodiment 4, grape skins were extracted with water and concentrated to obtain a grape skin extract. This was adjusted to Brix 22 percent (pH 4.2) and employed as a fermentation starting material. At that time, the 3MH precursor concentration of the fermentation starting material was 5,985.9 nM (3MH-*S*-Cys: 4,909.9 nM, 3MH-S-GSH: 1,076.0 nM) and the total polyphenol concentration was 625 ppm. Into 750 mL glass containers were poured 500 mL quantities of the fermentation starting material. At a fermentation temperature of 30ºC, a container inoculated with yeast (*Saccharomyces cerevisiae:* CY3079 (prepared by Lallemand)) at about 2.0 x 10⁶ cfu/mL (Embodiment 8-1), a container inoculated with a lactic acid bacterium (*Oenococus oeni*: MVP41 (prepared by Lallemand)) at about 1.0 x 10⁷ cfu/mL followed two days later by inoculation with yeast (*Saccharomyces cerevisiae:* CY3079 (prepared by Lallemand)) at about 2.0 x 10⁶ cfu/mL (Embodiment 8-2), and a container inoculated with a lactic acid bacterium (*Lactobacillus plantarum*: NBRC101978) at 1.0 x 10⁷ cfu/mL followed two days later by inoculation with yeast *(Saccharomyces cerevisiae:* CY3079 (prepared by Lallemand)) at about 2.0 x 10⁶ cfu/mL (Embodiment 8-3) were prepared. These containers were statically fermented for 10 days each, after which the yeast and lactic acid bacteria were removed by centrifugal separation, yielding fermented drinks. The 3MH and 3MHA concentrations of the fermented drinks obtained were measured. Further, the ratio of the total 3MH concentration in the fermented drink obtained was calculated for the 3MH precursor concentration contained in the fermentation starting material and the 3MH conversion rate was calculated. The results are given in Table 8.

**[Table 8]**

| Embodiment | Inoculation timing with Lactic acid bacterium | Inoculation timing with yeast | Initial pH | Fermentation temp.(°C) | Fermentation period (days) | Alcohol conc. (%v/v) | 3MH (nM) (A) | 3MHA (nM) (B) | Total 3MH concentration (nM) {(A)+(B)} | 3MH Conversion (%mol/mol) |
|---|---|---|---|---|---|---|---|---|---|---|
| 8-1 | Not used | Just after preparation of fermentation starting material | 4.2 | 30 | 10 | 11.0 | 195.8 | 2.6 | 198.3 | 3.31 |
| 8-2 | Just after preparation of fermentation starting material | 0 day after lactic acid bacterium addition | 4.2 | 30 | 10 | 10.9 | 174.5 | 2.6 | 177.1 | 2.96 |
| 8-3 | Just after preparation of fermentation starting material | 0 day after lactic acid bacterium addition | 4.2 | 30 | 10 | 10.9 | 489.1 | 7.8 | 497.0 | 8.30 |

As indicated in Table 8, high total 3MH concentration was obtained in all of the Embodiments. The fermented drink prepared with just yeast and the fermented drink prepared with a lactic acid bacterium (*Oenococus oeni*) and yeast both had about the same 3MH conversion rate. The 3MH conversion rate of the fermented drink prepared with a lactic acid bacterium (*Lactobacillus plantarum*) and yeast was higher.

### Embodiment 9

### Producing high 3MH-content drinks employing grape skin extract (Chardonnay variety) as fermentation starting material -- An examination of the quantity of grape skin extract employed

A mixture of a grape skin extract (Brix 50 percent), obtained in the same manner as in Embodiment 4 by extracting grape skins with water and concentrating the extract, and hydrous crystalline glucose (prepared by Nihon Shokuhin Kako) was diluted with water to prepare the three fermentation starting materials listed in Table 9 (Embodiments 9-1 to 9-3).

**[Table 9]**

| Embodiment | Grape skin extract (Brix50%) used amount (g/L) | Hydrous crystalline glucose used amount (g/L) | Brix (%) | Initia l pH | Total polyphenol concentratio n (ppm) | 3MH-S-Cys (nM) (a) | 3MH-S-GSH (nM) (b) | 3MH precursors conc. (nM) (a)+(b) |
|---|---|---|---|---|---|---|---|---|
| 9-1 | 113 | 159.3 | 20.2 | 4.7 | 179 | 1314.5 | 419.1 | 1733.6 |
| 9-2 | 272 | 70.3 | 20.2 | 4.6 | 421 | 2895.9 | 997.5 | 3893.5 |
| 9-3 | 453 | 0 | 22. 2 | 4.5 | 715 | 4705.9 | 1691.2 | 6397.1 |

Into 750 mL glass containers were poured 500 mL each of these fermentation starting materials. At a fermentation temperature of 30ºC, the containers were then inoculated with a lactic acid bacterium (*Lactobacillus plantarum*: THT030702 (prepared by THT)) at about 1.0 x 10⁶ cfu/mL followed two days later by inoculation with yeast (*Saccharomyces cerevisiae:* VIN13 (prepared by Anchor)) at about 2.0 x 10⁶ cfu/mL. The mixtures were statically fermented for 8 days, after which the yeast and lactic acid bacterium were removed by centrifugal separation, yielding fermented drinks. The 3MH and 3MHA concentrations of the fermented drinks obtained were measured. Further, the ratio of the total 3MH concentration in the fermented drink obtained was calculated for the 3MH precursor concentration contained in the fermentation starting material and the 3MH conversion rate was calculated. The results are given in Table 10.

**[Table 10]**

| Embodiment | Inoculation timing with Lactic acid bacterium | Inoculation timing with yeast | Fermentation temp. (°C) | Fermentation period (days) | Alcohol conc. (%v/v) | 3MH (nM) (A) | 3MHA (nM) (B) | Total 3MH concentration (nM) {(A)+(B)} | 3MH Conversion (%mol/mol) |
|---|---|---|---|---|---|---|---|---|---|
| 9-1 | Just after preparation of fermentation starting material | 2 days after lactic acid bacterium inoculation | 30 | 8 | 10.8 | 417.6 | 2.7 | 420.3 | 24.2 |
| 9-2 | Just after preparation of fermentation starting material | 2 days after lactic acid bacterium inoculation | 30 | 8 | 11.2 | 478.8 | 38.3 | 517.1 | 13.3 |
| 9-3 | Just after preparation of fermentation | 2 days after lactic acid | 30 | 8 | 10.5 | 602.0 | 93.7 | 695.8 | 10.9 |
| | starting material | bacterium inoculation | | | | | | | |

As indicated in Table 10, increasing the quantity of grape skin extract employed increased the total 3MH concentration. Conversely, suppressing the quantity of grape skin extract employed raised the 3MH conversion rate. This was attributed to an increase in the 3MH conversion ability of the lactic acid bacterium and yeast due to a relative reduction in the quantity of total polyphenols.

### Embodiment 10

### An examination of the effect of the total polyphenol concentration on the 3MH concentration

A 150 g quantity of grape skin extract (Brix 50 percent) obtained by extracting grape skins with water and concentrating the extract in the same manner as in Embodiment 4 was mixed with 45 g of hydrous crystalline glucose (prepared by Nihon Shokuhin Kako). The mixture was then diluted with water to prepare a Brix 22 percent fermentation starting solution (pH 4.6). At the time, the 3MH precursor concentration of the fermentation starting material was 4,147.7 nM (3MH-S-Cys: 3,054.3 nM, 3MH-S-GSH: 1,093.4 nM) and the total polyphenol concentration was 421 ppm. Gallic acid, a type of polyphenol, was added to 100 mL quantities of the fermentation starting material to achieve total polyphenol concentrations of 421, 803, 1,222, 2,414, and 4,851 ppm. The mixtures were then transferred to 180 mL glass containers, inoculated with a lactic acid bacterium (*Lactobacillus plantarum*: THT 030702 (prepared by THT)) at about 1.0 x 10⁶ cfu/mL at a fermentation temperature of 30ºC, followed two days later by inoculation with yeast *(Saccharomyces cerevisiae:* VIN13 (prepared by Anchor)) at about 2.0 x 10⁶ cfu/mL, and statically fermented for six days. Subsequently, the yeast and lactic acid bacterium were removed by centrifugal separation, yielding various fermented drinks. The 3MH and 3MHA concentrations of the fermented drinks obtained were measured. Further, the ratio of the total 3MH concentration in the fermented drink obtained was calculated for the 3MH precursor concentration contained in the fermentation starting material and the 3MH conversion rate was calculated. The results are given in Table 11.

**[Table 11]**

| Total polyphenol concentration (ppm) | Alcohol concentration (%v/v) | 3MH (nM) (A) | 3MHA (nM) (B) | Total 3MH concentration (nM) {(A)+(B)} | 3MH conversion (%mol/mol) |
|---|---|---|---|---|---|
| 421 | 11.3 | 529.8 | 29 | 558.8 | 13.47 |
| 803 | 10.9 | 535.2 | 18.4 | 553.6 | 13.35 |
| 1222 | 11.3 | 493.2 | 19.9 | 513.1 | 12.37 |
| 2414 | 11.3 | 528.8 | 23.3 | 552.1 | 13.31 |
| 4851 | 11.7 | 75.9 | 3.1 | 79.1 | 1.91 |

### Reference Example 1

Confirmation and comparison of rate of conversion of 3MH-*S*-GSH to 3MH-*S*-Cys by yeast in model medium (Both of the precursors: organically synthesized) Methodology
1) Precursors were organically synthesized by the methods described in the literature cited below:
   3MH-S-GSH: The method of C. P. des Gachons, T. Tominaga et al (J. Agric. Food Chem. 2002, 50, 4076-4079.)
   3MH-S-Cys: The method of C. Thibon, S. Shinkaruk, et al. (J. Chromatogr. A 2008, 1183, 150-157.)
2) The model medium (KP medium described in the literature cited below was employed in partially modified form):
   Report by P. Marullo, M. Bely, et al. (FEMS Yeast Res. 2006, 6, 268-279.)
3) 3MH-*S*-GSH and 3MH-*S*-Cys that had been organically synthesized on a clean bench in prepared model medium were mixed to 2,000 nM.
4) These were inoculated with yeast (Saccharomyces cerevisiae: VL3 (prepared by Laffort)) at about 2.0 x 10⁵ cfu/mL.
5) Fermentation was statically conducted for 9 days at a temperature of 20ºC, after which the cultures were cooled to 5ºC. After precipitating out the yeast, the supernatant was collected and the 3MH content was analyzed.

### Results

As indicated in Table 5, the conversion of both precursors to 3MH by yeast was confirmed, and the fact that 3MH-*S*-Cys was converted more efficiently (about 8.3-fold) than 3MH-S-GSH to 3MH by yeast was confirmed. In Table 12, the "Quantity of 3MH precursor added" is the quantity of 3MH precursor that was added to the model medium.

**[Table 12]**

| | Quantity of 3MH precursor added (nM) | Initial pH | Fermentation temperature (°C) | Fermentation period (days) | 3MH (nM) (A) | 3MHA (nM) (B) | Total 3MH Concentration (nM) {(A)+(B)} | 3MH Conversion (%mol/mol) |
|---|---|---|---|---|---|---|---|---|
| 3MH-S-GSH | 2000 | 3.3 | 20 | 9 | 10.39 | 0.34 | 10.73 | 0.54 |
| 3MH-S-Cys | 2000 | 3.3 | 20 | 9 | 87.51 | 1.83 | 89.34 | 4.47 |

### Reference Example 2

The various grapes listed in Table 13 were pressed with a manually operated juicer to obtain various grape juices.

The Brix (%) and 3MH precursor contents of the grape juices obtained were measured.

**[Table 13]**

| Variation | Brix (%) | 3MH-S-Cys (nM) (A) | 3MH-S-GSH (nM) (B) | 3MH precursor concentration (nM){(A)+(B)} |
|---|---|---|---|---|
| Sauvignon blanc | 20.3 | 47.4 | 151.4 | 198.8 |
| Semillon | 17.3 | 23.3 | 32.3 | 55.5 |
| Koshu | 14.7 | 46.5 | 89.9 | 136.4 |
| Viognier | 22.7 | 21.8 | 28.4 | 50.2 |
| Chardonnay | 19.6 | 27.6 | 71.3 | 98.9 |
| Pinot noir | 21.4 | 42.4 | 251.6 | 294.0 |
| Merlot | 19.1 | 34.8 | 143.5 | 178.3 |
| Cabernet Sauvignon | 17.7 | 29.4 | 214.7 | 244.2 |

### [Industrial Applicability]

The present invention is useful in the field of producing fermented drinks such as wine.

## Claims

1. A method of production of a solution containing 3-mercaptohexan-1-ol and alcohol, comprising:
inoculating a starting material aqueous solution comprising *S*-(3-hexan-1-ol)glutathione and S-(3-hexan-1-ol)-L-cysteine with a lactic acid bacterium and yeast to produce 3-mercaptohexan-1-ol and alcohol;
wherein the starting material aqueous solution consists of a grape skin extract;
the lactic acid bacterium is a lactic acid bacterium that is capable of converting *S*-(3-hexan-1-ol)glutathione to *S*-(3-hexan-1-ol)-L-cysteine; and
after inoculating the starting material aqueous solution with a lactic acid bacterium and conducting fermentation for 0 to 6 days, the aqueous solution is inoculated with the yeast and alcohol fermentation is conducted,
wherein the starting material aqueous solution exhibits a concentration of *S*-(3-hexan-1-ol)glutathione based on a Brix 20 percent conversion in a range of 300 to 8,000 nM and a concentration of *S*-(3-hexan-1-ol)-L-cysteine in a range of 70 to 11,100 nM.

2. The production method according to claim 1, wherein the starting material aqueous solution exhibits a combined concentration of *S*-(3-hexan-1-ol)glutathione and S-(3-hexan-1-ol)-L-cysteine based on a Brix 20 percent conversion in a range of 500 and 15,500 nM.

3. The production method according to claim 1 or 2, wherein the grape skin extract is prepared by a method comprising:
(1) a step of macerating grape skins in a 0.5 to 3-fold quantity of water relative to the wet weight of the grape skins and maintaining the grape skins therein for 0.5 to 96 hours at 0 to 20ºC to extract *S*-(3-hexan-1-ol)glutathione and *S*-(3-hexan-1-ol)-L-cysteine; and
(2) a step of separating the solid from the liquid in the grape skin maceration solution and removing the grape skins to obtain the grape skin extract.

4. The production method according to claim 3, wherein the grape skins are the skins of grapes of the Sauvignon blanc or Chardonnay variety.

5. The production method of any one of claims 1 to 4, wherein the 3-mercaptohexan-1-ol and alcohol-containing solution further comprises 3-mercaptohexyl acetate, with the total 3-mercaptohexan-1-ol concentration, which is the combined concentration of 3-mercaptohexan-1-ol and 3-mercaptohexyl acetate, falling within a range of 25 to 5,500 nM.

6. The production method according to any one of claims 1 to 5, wherein the period of fermentation by the lactic acid bacterium prior to inoculation with yeast is 1 to 5 days.

7. The production method according to any one of claims 1 to 6, wherein the starting material aqueous solution exhibits a pH in a range of 3 to 9 and the fermentation temperature falls within a range of 10 to 40ºC.

8. The production method of any one of claims 1 to 7, wherein the lactic acid bacterium belongs to the genus Lactobacillus.

9. The production method according to claim 8, wherein the lactic acid bacterium belonging to the genus Lactobacillus is a lactic acid bacterium belonging to *Lactobacillus plantarum, Lactobacillus pentosus, Lactobacillus hilgardii or Lactobacillus mali.*

10. The production method of any one of claims 1 to 9, wherein the starting material aqueous solution exhibits a Brix (%) in a range of 10 to 28 percent.

11. The production method according to any one of claims 1 to 10, wherein the 3-mercaptohexan-1-ol and alcohol-containing solution has an alcohol concentration falling within a range of 0.5 to 14 percent.

12. A method of production of a drink with an improved aroma, comprising producing a 3-mercaptohexan-1-ol and alcohol-containing solution having a total 3-mercaptohexan-1-ol concentration of 150 nM or greater by the method according to any one of claims 1 to 11, and mixing the 3-mercaptohexan-1-ol and alcohol-containing solution thus obtained with a beverage to obtain a beverage with a high 3-mercaptohexan-1-ol content.

13. The production method according to claim 12, wherein the beverage used for mixing is wine.

14. The production method according to claim 12 or 13, wherein the beverage with a high 3-mercaptohexan-1-ol content exhibits a total 3-mercaptohexan-1-ol concentration in a range of 1 to 150 nM.

## Patentansprüche

1. Verfahren zur Herstellung einer Lösung, die 3-Mercaptohexan-1-ol und Alkohol enthält, umfassend:
Beimpfen einer wässrigen Ausgangsmateriallösung, die S-(3-Hexan-1-ol)glutathion und S-(3-Hexan-1-ol)-L-cystein enthält, mit einem Milchsäurebakterium und Hefe, um 3-Mercaptohexan-1-ol und Alkohol herzustellen;
wobei die wässrige Ausgangsmateriallösung aus einem Traubenschalenextrakt besteht;
wobei das Milchsäurebakterium ein Milchsäurebakterium ist, das in der Lage ist, S-(3-Hexan-1-ol)glutathion zu S-(3-Hexan-1-ol)-L-cystein umzusetzen; und
wobei, nach Beimpfen der wässrigen Ausgangsmateriallösung mit einem Milchsäurebakterium und Durchführung der Fermentation für 0 bis 6 Tage, die wässrige Lösung mit der Hefe beimpft wird und eine alkoholische Gärung durchgeführt wird,
wobei die wässrige Ausgangsmateriallösung eine Konzentration an S-(3-Hexan-1-ol)glutathion, basierend auf einer Brix 20 Prozent Umwandlung, in einem Bereich von 300 bis 8.000 nM und eine Konzentration an S-(3-Hexan-1-ol)-L-cystein in einem Bereich von 70 bis 11.100 nM aufweist.

2. Herstellungsverfahren nach Anspruch 1, wobei die wässrige Ausgangsmateriallösung eine kombinierte Konzentration an S-(3-Hexan-1-ol)glutathion und S-(3-Hexan-1-ol)-L-cystein, basierend auf einer Brix 20 Prozent Umwandlung, in einem Bereich von 500 und 15.500 nM aufweist.

3. Herstellungsverfahren nach Anspruch 1 oder 2, wobei der Traubenschalenextrakt durch ein Verfahren hergestellt wird, umfassend:
(1) einen Schritt zur Mazeration von Traubenschalen in einer 0,5 bis 3-fachen Wassermenge bezogen auf das Nassgewicht der Traubenschalen und Belassen der Traubenschalen darin für 0,5 bis 96 Stunden bei 0 bis 20°C, um S-(3-Hexan-1-ol)glutathion und S-(3-Hexan-1-ol)-L-cystein zu extrahieren; und
(2) einen Schritt zur Trennung der Feststoffe von der Flüssigkeit in der Traubenschalenmazerationslösung und Entfernen der Traubenschalen, um den Traubenschalenextrakt zu gewinnen.

4. Herstellungsverfahren nach Anspruch 3, wobei die Traubenschalen die Schalen der Traubensorten Sauvignon blanc oder Chardonnay sind.

5. Herstellungsverfahren nach einem der Ansprüche 1 bis 4, wobei die 3-Mercaptohexan-1-ol und Alkohol enthaltende Lösung weiterhin 3-Mercaptohexylacetat enthält, wobei die Gesamtkonzentration an 3-Mercaptohexan-1-ol, welche die kombinierte Konzentration aus 3-Mercaptohexan-1-ol und 3-Mercaptohexylacetat ist, in einen Bereich von 25 bis 5.500 nM fällt.

6. Herstellungsverfahren nach einem der Ansprüche 1 bis 5, wobei die Zeitspanne der Fermentation durch das Milchsäurebakterium vor der Beimpfung mit Hefe 1 bis 5 Tage beträgt.

7. Herstellungsverfahren nach einem der Ansprüche 1 bis 6, wobei die wässrige Ausgangsmateriallösung einen pH im Bereich von 3 bis 9 aufweist und die Fermentationstemperatur in einen Bereich von 10 bis 40°C fällt.

8. Herstellungsverfahren nach einem der Ansprüche 1 bis 7, wobei das Milchsäurebakterium zur Gattung Lactobacillus gehört.

9. Herstellungsverfahren nach Anspruch 8, wobei das Milchsäurebakterium, das zur Gattung Lactobacillus gehört, ein Milchsäurebakterium ist, welches zu *Lactobacillus plantarum, Lactobacillus pentosus, Lactobacillus hilgardii* oder *Lactobacillus mali* gehört.

10. Herstellungsverfahren nach einem der Ansprüche 1 bis 9, wobei die wässrige Ausgangsmateriallösung einen Brix (%) in einem Bereich von 10 bis 28 Prozent aufweist.

11. Herstellungsverfahren nach einem der Ansprüche 1 bis 10, wobei die 3-Mercaptohexan-1-ol und Alkohol enthaltende Lösung eine Alkoholkonzentration aufweist, die in einen Bereich von 0,5 bis 14 Prozent fällt.

12. Verfahren zur Herstellung eines Getränks mit einem verbesserten Aroma, welches die Herstellung einer 3-Mercaptohexan-1-ol und Alkohol enthaltenden Lösung mit einer Gesamtkonzentration an 3-Mercaptohexan-1-ol von 150 nM oder mehr durch das Verfahren nach einem der Ansprüche 1 bis 11 umfasst, und das Mischen der so erhaltenen 3-Mercaptohexan-1-ol und Alkohol enthaltenden Lösung mit einem Getränk, um ein Getränk mit einem hohen Gehalt an 3-Mercaptohexan-1-ol zu erhalten.

13. Herstellungsverfahren nach Anspruch 12, wobei das zum Mischen verwendete Getränk Wein ist.

14. Herstellungsverfahren nach Anspruch 12 oder 13, wobei das Getränk mit einem hohen Gehalt an 3-Mercaptohexan-1-ol eine Gesamtkonzentration an 3-Mercaptohexan-1-ol in einem Bereich von 1 bis 150 nM aufweist.

## Revendications

1. Méthode de production d'une solution contenant du 3-mercaptohexan-1-ol et de l'alcool, comprenant :
l'inoculation d'une solution aqueuse de matériau de départ comprenant du *S*-(3-hexan-1-ol)glutathion et de la *S*-(3-hexan-1-ol)-L-cystéine avec une bactérie lactique et une levure pour produire du 3-mercapto-hexan-1-ol et de l'alcool ;
dans laquelle la solution aqueuse de matériau de départ consiste en un extrait de peau de raisin ;
la bactérie lactique est une bactérie lactique qui est capable de convertir le *S*-(3-hexan-1-ol)glutathion en la *S*-(3-hexan-1-ol)-L-cystéine ; et
après l'inoculation de la solution aqueuse de matériau de départ avec une bactérie lactique et la conduction d'une fermentation pendant 0 à 6 jours, la solution aqueuse est inoculée avec la levure et la fermentation de l'alcool est conduite,
dans laquelle la solution aqueuse de matériau de départ présente une concentration de *S*-(3-hexan-1-ol)-glutathion basée sur une conversion de Brix de 20 pour cent dans une plage de 300 à 8000 nM et une concentration de *S*-(3-hexan-1-ol)-L-cystéine dans une plage de 70 à 11 100 nM.

2. Méthode de production selon la revendication 1, dans laquelle la solution aqueuse de matériau de départ présente une concentration combinée de *S*-(3-hexan-1-ol)glutathion et de *S*-(3-hexan-1-ol)-L-cystéine basée sur une conversion de Brix de 20 pour cent dans une plage de 500 à 15 500 nM.

3. Méthode de production selon la revendication 1 ou 2, dans laquelle l'extrait de peau de raisin est préparé par une méthode comprenant :
(1) une étape de macération des peaux de raisin dans une quantité d'eau de 0,5 à 3 fois par rapport au poids humide des peaux de raisin et de maintien des peaux de raisin dans celle-ci pendant 0,5 à 96 heures à 0 à 20 °C pour extraire le *S*-(3-hexan-1-ol)glutathion et la *S*-(3-hexan-1-ol)-L-cystéine ; et
(2) une étape de séparation du solide à partir du liquide dans la solution de macération des peaux de raisin et l'élimination des peaux de raisin pour obtenir l'extrait de peau de raisin.

4. Méthode de production selon la revendication 3, dans laquelle les peaux de raisin sont les peaux de raisins de la variété Sauvignon blanc ou Chardonnay.

5. Méthode de production selon l'une quelconque des revendications 1 à 4, dans laquelle la solution contenant du 3-mercaptohexan-1-ol et de l'alcool comprend en outre de l'acétate de 3-mercaptohexyle, avec la concentration totale de 3-mercaptohexan-1-ol, qui est la concentration combinée de 3-mercaptohexan-1-ol et d'acétate de 3-mercaptohexyle, se situant dans une plage de 25 à 5500 nM.

6. Méthode de production selon l'une quelconque des revendications 1 à 5, dans laquelle la période de fermentation par la bactérie lactique avant l'inoculation avec la levure est de 1 à 5 jours.

7. Méthode de production selon l'une quelconque des revendications 1 à 6, dans laquelle la solution aqueuse de matériau de départ présente un pH dans une plage de 3 à 9 et la température de fermentation se situe au sein d'une plage de 10 à 40 °C.

8. Méthode de production selon l'une quelconque des revendications 1 à 7, dans laquelle la bactérie lactique appartient au genre Lactobacillus.

9. Méthode de production selon la revendication 8, dans laquelle la bactérie lactique appartenant au genre Lactobacillus est une bactérie lactique appartenant à *Lactobacillus plantarum, Lactobacillus pentosus, Lactobacillus hilgardii* ou *Lactobacillus mali.*

10. Méthode de production selon l'une quelconque des revendications 1 à 9, dans laquelle la solution aqueuse de matériau de départ présente un Brix (%) dans une plage de 10 à 28 pour cent.

11. Méthode de production selon l'une quelconque des revendications 1 à 10, dans laquelle la solution contenant du 3-mercaptohexan-1-ol et de l'alcool présente une concentration en alcool située au sein d'une plage de 0,5 à 14 pour cent.

12. Méthode de production d'une boisson avec un arôme amélioré, comprenant la production d'une solution contenant du 3-mercaptohexan-1-ol et de l'alcool présentant une concentration totale de 3-mercaptohexan-1-ol de 150 nM ou supérieure par le procédé selon l'une quelconque des revendications 1 à 11, et le mélange de la solution contenant du 3-mercaptohexan-1-ol et de l'alcool ainsi obtenue avec une boisson pour obtenir une boisson avec une teneur élevée en 3-mercaptohexan-1-ol.

13. Méthode de production selon la revendication 12, dans laquelle la boisson utilisée pour le mélange est du vin.

14. Méthode de production selon la revendication 12 ou 13, dans laquelle la boisson avec une teneur élevée en 3-mercaptohexan-1-ol présente une concentration totale de 3-mercaptohexan-1-ol dans une plage de 1 à 150 nM.
